# EUROPEAN PATENT SPECIFICATION

(11) **EP 3 567 146 B1**
(45) Date of publication and mention of the grant of the patent: **12.04.2023**
(21) Application number: 19173335.1
(22) Date of filing: 08.05.2019
(51) Int. Cl.: D04B 1/16, D04B 1/12, D04B 37/04, D04B 1/10, A43B 1/04, A43B 23/04

(54) **SYSTEM AND METHOD FOR KNITTING A POLYMER REINFORCING FIBER FOOTWEAR UPPER**
SYSTEM UND VERFAHREN ZUM STRICKEN EINES POLYMERVERSTÄRKUNGSFASERSCHUHOBERTEILS
SYSTÈME ET PROCÉDÉ DE TRICOTAGE D'UN POLYMÈRE DE RENFORCEMENT DE TIGE DE CHAUSSURE À FIBRES

(30) Priority: 08.05.2018 US 201862668616 P; 07.05.2019 US 201916405435
(43) Date of publication of application: 13.11.2019
(73) Proprietor: Fabdesigns, Inc., Malibu, CA 90265 (US)
(72) Inventor: Huffa, Bruce, Malibu, CA 90265 (US); Huffa, Concetta Maria, Malibu, CA 90265 (US)
(74) Representative: Rooney, John-Paul

(56) References cited:
- US-A1- 2014 134 378
- US-A1- 2016 029 736
- US-A1- 2016 075 061
- US-A1- 2018 055 145

## Description

### TECHNICAL FIELD

Embodiments of the present disclosure relate to a footwear article, more specifically a seamless footwear article, and a method of manufacturing seamless footwear articles.

### BACKGROUND OF THE INVENTION

Current fiber-reinforced footwear uppers and shoe components on the market are formed by: cutting two-dimensional woven sheets of homogenous fiber-reinforced materials; molding the cut parts to one or more curves; and seaming the elements to wrap around a foot. Each seam represents a join, and each facet and/or plane is created by bending cut-and-joined pieces of the two-dimensional Fiber-reinforced Polymer (FRP) composite sheets to conform to the curves of a foot.

Utilizing woven two-dimensional sheets of homogenous fiber-reinforced materials poses several challenges. First, woven FPR materials align fibers only in two directions, which are warp and weft, horizontally and vertically respectively. To achieve more than two dimensions, the FRP sheet needs to be bent molded and/or other material needs to be stacked and/or applied.

Second, cutting, dynamic tensioning of bending cut pieces and joining edges of cut pieces all take considerable equipment and effort. Creating a desired FRP shape may take several post processes to structure the two-dimensional FRP parts. Additionally, finished two-dimensional FRP panel sheets made with epoxy resin cannot be bent to hold a curved shape, due to the panels not being heat formable (thermoplastic). A limited amount of curvature can be permanently applied to a carbon fiber-reinforced polymerized panel sheet ("graphene reinforced polymer") and in one direction, using high heat over two-hundred degrees Celsius. Simple curves, such as a cylinder shape, can be applied to a carbon FRP panel sheet of carbon fiber. However, applying a panel sheet of carbon fiber-reinforced polymer to a complex curve such as a sphere is not possible. Fiber-reinforced panels must be cut and pieced together to fit complex shapes.

Currently, there are several methods to cut fiber-reinforced polymer sheets, ready for shaping. Cutting polymerized composite sheets presents special handling and safety concerns due to the cutting process expelling loose fibers into the environment. Loose fibers are an irritant to skin, lungs, and eyes. Cut edges may be very sharp, and have splinters, creating additional handling concerns of sheet panels and cut pieces. In cutting carbon fiber-reinforced Polymer panel sheets with a CNC machine, experienced skills are required. Yet, it is still difficult to hold the sheets in the machine, which results in handling issues described above, potential damage to the FRP sheets themselves, and high defect rates in cut parts. Die cutting carbon FRP sheets also requires highly-skilled experienced operators. Water-jet equipment used to cut carbon FRP sheets also requires expensive complex machinery and highly-skilled experienced operators. Specialized adhesives are required to seam FRP panel pieces including carbon fiber cut pieces. The seaming process adds significant time and effort due to time required for adhesives to dry thoroughly. Moisture from adhesives reacts with polymer resin, causing the fiber-reinforced part to bubble over time and/or the seam to fail.

Third, joining two-dimensional planes may result in pressure points on various parts of the foot. Seams in common textiles create pressure points on the foot, resulting in blisters and other irritations. Seams and bending of otherwise stiff two-dimensional materials such as composites, amplify chafing, pressure points, irritation and overall discomfort. Seams in common materials create potential failure points. Besides taking specialized materials, special adhesives, extra time and operator skills, seaming stiff materials such as composites, which want to revert back to their sheet form, are difficult to work with, handle, cut, and seam. Problems with seaming may not arise for some time after the fiber-reinforced cut parts are already functional in an assembly.

Fourth, joints in two-dimensional FRP sheets create potential thick or thin spots in the reinforcement as well as create potential aesthetic defects and potential failure spots in the part. Fifth, the cutting and fabricating the two-dimensional FRP material itself create significant waste of nearly indestructible material, which may not be recyclable. Sixth, additional materials or strengthening parts need to be applied in separate processes, taking additional assembly time and equipment. The parts applied may present added potential failure points. Aesthetically, the additional parts may not lend themselves to a streamlined and aerodynamic look and rather appear clunky.

Knitting polymer reinforcing fibers to desired shapes provides several advantages. First, they can provide an exceptionally strong reinforcement by creating small arches, in what the trade calls an "amorphous orientation," meaning it spreads the reinforcement in multiple directions relatively evenly. Rather than just two directions, warp and weft as in woven FRP sheets, knitting can align the knitted fibers into loop structures, V-tuck structures, corrugations, comers, boxes, tunnels, channels, ellipses, and other three-dimensional configurations, including foot shaped configurations. Through the knitting process, one or more of the same strands of a material run through the upper, a liner or a component of a footwear upper, which allows it to bend in multiple directions.

Second, knitting polymer reinforcing fibers to shape on a V-bed knitting machine eliminates the need for cutting and requires only the knitting machine to create the polymer reinforcing fiber structure. Third, knitting polymer reinforcing fibers to an anatomical shape or to the shape of a mold eliminates or minimizes the need for joins, creating fewer pressure points caused by joins, flat sections, and hard curves in shaping two-dimensional sheets. There is no need for short term or long-term monitoring of seams as knitting to shape eliminates seams.

Fourth, knitting fiber reinforcing materials to shape uses only what is needed to create the part. The edges are completely finished, requiring no cutting. Fifth, adding additional materials to a polymer reinforcing fiber in the knitting process embeds the materials in the structure at the same time and in the same process. Additional assembly equipment, creating sub-assemblies, bundling, and coordinating for assembly may not be needed as the reinforcing structure is completed with the embedded additional materials, thereby eliminating additional processes, joins, and potential failure points. Aesthetically, the additional materials may be knitted in, on, or under the structure in the same knitting process.

Knitting stiff fibers, polymer reinforcing fibers, wire, cable, and many other stiff materials (such as carbon fiber) on standard OEM feeder systems and the supplemental machine builder accessories demands that the stiff materials bend several times, from when they are deployed from their package and through multiple right, obtuse, and acute angles as they pass through standard OEM fittings and guides which are usually designed for flexible apparel yams. Materials running through these fittings and guides cause a significant amount of friction. The resultant static buildup can damage machine computers and other machine electronics, for example, by causing breakage of fiber, excessive wear on the machine parts, dragging of fiber slowing down production, and many other complications. Carbon fiber, wire, and many other materials are typically packaged on a spool a cylinder, or a cone, which, when deploying material, cause the materials to balloon on itself and spiral into a coil. After several revolutions, the spiraling process can create a graduated spring in the fabric and in the slack strand, which is undesirable in and of itself. A strand twisting upon itself causes fiber breakage, excess friction and abrasion on the machine parts that touch the fibers, and finally breaking of the strand itself, when it can no longer continue to twist upon itself. Breakage can usually not be mended on the strand and/or the fabric growing in the machine, and results in waste scrap, production down time, damaged product, and frequently damaged machine parts. Examples of these machine parts are needles, stop motions, knock over verges, sinkers, sinker, wires, and etc.

Currently, the only practical alternative is using one of two unspooling devices from either of two machine builders, depending on which machine type the user is utilizing, and then only two devices mounted on supplemental racking systems to the side of the machine.

A textile may be defined as any article manufactured from fibers, filaments, or yams and can be characterized by flexibility, fineness, and a high ratio of length to thickness. The materials forming a shoe upper may be selected based upon the desired properties of wear-resistance, flexibility, stretch, air-permeability, and strength, for example. One of the strongest, stiffest, and more protective fibers is composite carbon fiber. In conventional manufacturing, textile footwear uppers are seamed and later attached to a sole. Fiber-reinforced Polymer (FRP) composite materials are commonly used in several types of protective, performance, and sport footwear uppers due to their stiffness and light weight.

Carbon fiber is considered a premium FRP material when incorporated into footwear, due to the high-end costs of weaving, handling, cutting, polymerizing, and manufacturing components from two-dimensional sheets. For aesthetic purposes in footwear it is often used in small amounts. It is used in moderate amounts for functional purposes, such as heat resistance, stiffening, debris and/or impact protection, high functionality performance in cold and extreme environments, extraordinarily high abrasion resistant characteristics, high durability, springiness when molded into convex curves, flex and recovery, shrink resistance and rigidity. Two-dimensional woven FRP parts, specifically composite carbon fiber sheeting, can be cut, shaped and polymerized for use in body-protecting wearable products, including footwear uppers for cycling, automotive racing, shoe inserts, sole plates, shanks (under the arch of the foot), heel counters, in portions of basketball shoes, and in running shoes. The FRP parts can reduce stretch and improve stability and responsiveness of the footwear article.

FIG. IB illustrates the composition of a composite material combining two or more chemically distinct materials and having improved properties over the original individual materials. As shown, one material is in a matrix phase 6, typically a polymer or resin. The other is in a reinforcing phase 5 (a reinforcement material) that is embedded in the matrix, which may include fibers, sheets, fabrics, or particles for example. A fiber and/or filament reinforcement material typically has high strength, high stiffness, and low density and can be in a long or short fiber form. Examples of reinforcement fibers are carbon ("graphene"), glass (S-glass, r-glass), hemp, jute, flax, boron, ceramics metals, aramids, para-aramids, basalt, metals (aluminum alloys, magnesium alloys, titanium, etc.), shape memory alloys, and ceramics (SiC, glass ceramic, etc.). The matrix material typically has good shear properties and low density. Examples of matrix materials are polymers (epoxides, polyesters, nylons, HDPE, etc.), resins, plastics, metals (aluminum alloys, magnesium alloys, titanium, etc.), and ceramics (SiC, glass ceramic, etc.). There may also be an interface for ensuring bonding and/or surface adherence.

FRP materials are a group of composite materials which are made up of a polymer matrix reinforced with fibers. Combining the fibers or textile material and characteristics of the polymers can form a new material with physical properties exceeding any of the original materials. Composite materials are used in aerospace, automotive, sporting goods and consumer goods because their strength-to-weight ratio can exceed all other known materials and material constructions.

Hundreds of types of resins are also available, each having specific chemical and physical characteristics. The most commonly used are the polyester and epoxy families. Various types of natural and synthetic fibers are commercially available as well. For example: glass, carbon, hemp, Kevlar^{®}, flax, boron, linen, basalt, and ultra-high-molecular-weight- polyethylene (UHMWPE).

The current manufacturing process for FRP composite materials involves bonding two or more homogenous materials of different material properties to derive a final product with certain desired material and mechanical properties. FPR is a category of composite materials that specifically use fiber materials to mechanically enhance the strength and elasticity of polymer matrices. Examples of the fibers most commonly used to reinforce polymer matrix materials are glass, carbon aramid, and basalt.

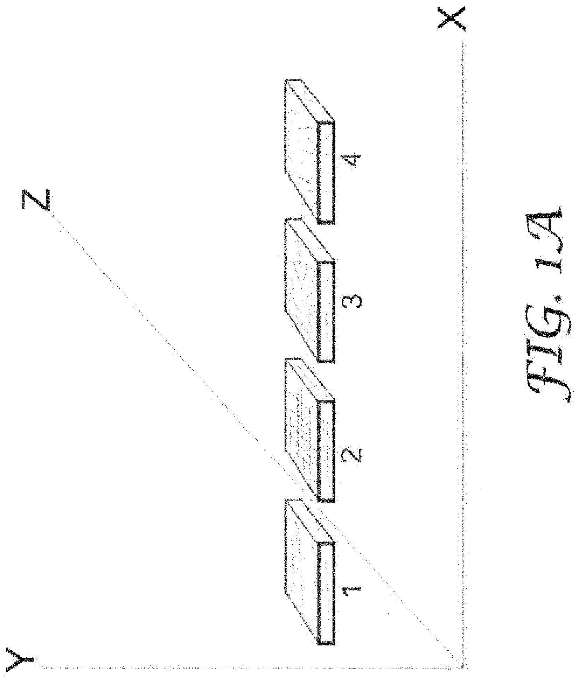

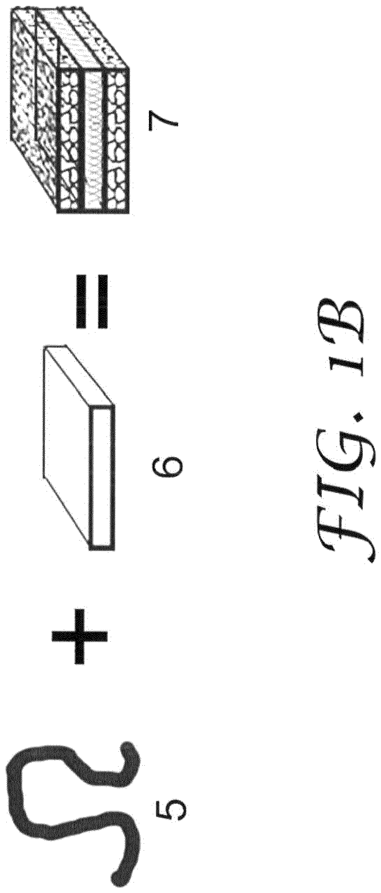

FIG. 1A demonstrates various forms of composite fiber alignments. From the perspective of manufacturing, as shown, the orientation of the reinforcement fibers in a composite may be substantially unidirectional 1, bi-directional 2, two-directional random 3, or three dimensional random 4. In a unidirectional or one-direction composite 1, the reinforcing fibers are aligned substantially in one direction on one plane, according to an X, Y, Z coordinate model. In a bi-directional composite 2, the reinforcing fibers are aligned substantially on one plane, but in two directions, sometimes perpendicular to each other. In a two-dimensional random composite 3, the reinforcing fibers are disposed on one plane, but in multiple random directions, including amorphous. In a three-dimensional random fiber-reinforced composite 4, the fibers lie in multiple random directions and on multiple planes.

As shown in FIG. IB, knitting cam create a fifth form of their orientation, which includes a complex distribution of linked fibers 5 in three-dimensions (e.g., homogeneously). This form of orientation may be layered in the knitting process. Polymer is added with the fibers 6, and the resulting structure 7 may be a thin single jersey sheet, a double-bed corrugation, or a combination knitted to a desired shape in one or more structures. The effect of fiber orientation on material properties is an important part of the strategic design of composite molding process. Fiber alignment impacts mechanical performance.

Mold cavity geometry can vary greatly throughout the part, especially in footwear. Traditionally knits drape better than woven constructions bi-directional. Knitting polymer reinforcing materials to the dimensions of the mold shape reduces layup time, but also orients the fibers into tiny links, which conform to the shape of the mold, much like chainmail conforms to a body. The resulting multi-dimensional fiber orientation has a direct correlation with mechanical properties. Highly oriented fibers have a high modulus in the direction of orientation and a much lower one, (about one-third as much) in the cross-direction (sides). Variation in fiber alignment corresponds to variations in mechanical properties and tensile strength in even unsophisticated part geometry. Under mechanical loading, uni-directional and bi-directional (FRP carbon fiber sheets) exhibit very strong tensile strength. However, they can be brittle when their edges are impacted and typically exhibit a significant plasticity prior to rupture when bent.

Knitted polymer reinforcing fibers are multi-dimensional and can be knitted in a variety of thicknesses and constructions that limit stretch in the weft or warp direction. Simple constructions, such as ribs can be added incrementally to improve strength. Additional reinforcing materials or more complex double bed structures may be added to impart stronger areas of rigidity. Conversely, knitting on flat bed weft machines offers other features which are not possible in weaving: voids are possible to create one or more open areas of varying shape; pockets, tunnels and channels may be knitted for inserting hardware or other functional components; spacers may add corrugation to one or more areas; complex curves may be knitted to fit the mold; and jacquards may add aesthetic design.

An important benefit of V-bed knitting is that fibers may be knitted to shape saving cutting, minimizing layup time, and eliminating wastage. Materials may also be knitted where desired for specific performance characteristics and functions. Teflon and other materials may be knitted in specific areas to resist resin. Heat resistant materials, such as silicon, may be knitted in intarsia areas to isolate areas of rigidity from areas of ligamental stretch silicon rubber. The heat resistant silicon material is unaffected by the molding process or, in the case of un-impregnated or comingled materials, the oven or autoclave: silicon rubber up to 300 degrees Celsius. Fiber density can be varied by the machine in different zones, and created in a gradient, latticed, layered, or any combination of knit structures. The density of reinforcing fibers in a composite structure may be seventy percent or more due to the fact that the fibers are responsible for the mechanical properties of the resulting composite. Thermoplastic and/or thermoset matrix materials are typically polyester epoxy, fluorocarbon, silicon, phenolic, etc. The resulting FRP matrix composite typically embodies properties superior to both the matrix material and the reinforcement material, such as high strength to weight, high stiffness, good shear properties and low density. Ceramic composites are used in high temperature and corrosive applications. Silicon carbide, ceramics, and other compounds of silicon and aluminum can be strategically knitted into protective structures and retain strength up to 3000 degrees Fahrenheit.

A computer-controlled knitting machine can consistently and repeatedly manufacture the same design for as many and as few as desired. Matrixed composites currently can be warp knitted, weft knitted, woven, nonwoven, braided, wrapped, or chopped fibers are laid in place as a non-woven. Braided tubes, braided webbing, warp knits, weft knits and woven yams ("strands") used for reinforcing polymer matrices are typically homogenous; for example: the common two-dimensional 2x2 twill pattern used for fabricating carbon fiber panels. Woven fabrics interlace two or more yam systems, vertically and horizontally, creating right angles or 'warp' and 'weft', and are the most common reinforcement structure. The yarns can be glass, carbon, para-aramids, aramids and other materials. Woven panels, braded tubes, non-woven mats and knitted constructions are typically regular in their formation and panel geometry, meaning they are tubular or rectangular in dimension, typically roll goods, and ready for subsequent cutting, forming, seaming and sealing processes.

The mechanical properties of aligning fibers perpendicular to each other in a "warp" and "weft" offers high density and modulus of strength. Creating three-dimensional interlocking and multilayered reinforcing fabrications, which are intrinsically knitted or woven, generally create stronger matrixed composites than laminated composites in relationship to thickness of the structure. Knitted fiber-reinforced fabrications can advantageously drape and conform to complex shapes in tools and /or molds, whether warp knit or weft knit structures. The structure of knitted fabric can be adjusted to the mold configurations, without puckering, bunching or gathering like woven fabrics, non-woven fabrics, and lamination structures.

The disadvantage of conventional knitted reinforcement structures is that roll knit goods that are typically used currently do not offer stiffness in any direction, horizontally, vertically, or diagonally. Stitching multiple types of composites together is typically done for fabrics without resin or with materials in the pre-resin impregnated format. Sewing with an equally abrasive reinforcing fiber is highly prone to damage.

Typically, for footwear, the composites are fabricated into two-dimensional woven or non-woven fabrications, where the fabrication or weave pattern is essentially homogenous throughout the two-dimensional panel (sheet). The large two-dimensional panels are later cut and subjected to heat and pressure to form the three-dimensional shape. Any additional structure elements or reinforcement elements to be incorporated must be layered onto the woven panel with a later sub-assembly process prior to forming the upper, upper component, or sole. For instance: the process of cutting carbon fiber components requires large specialized cutting systems with special cutting tooling, and is very labor intensive, and results in significant wastage of materials. Most of these cutting processes are only suitable for cutting two-dimensional panels. Fibers splinter off in the process resulting in sharp edges, loose fibers in the atmosphere and on surfaces, which must be removed. The cutting process itself often creates inconsistent rough cuts. Edges must be finished with a seam, seal point, binding, or closure operation to finish into a useable foot shaped component comfortable in receiving a foot.

Two specific categories of molding processes use fibers: wet layup where fibers are applied to a form and resin is poured and brushed into the reinforcing fiber or textile; and dry layup which uses resin prepreg (pre-impregnated) fibers with resins already absorbed in advance of placing into a mold. Dry lay-up employs high temperature and pressure to harden the preresinized fibers in the shape of the mold. Dry lay-up delivers better penetration of the resin and more uniform resin thickness than the wet layup system.

In the case of utilizing sheets of carbon fiber, and other composite sheets of FRP materials in the shoe making process, cutting and seaming them, creates problems of pressure points, which are increased at the seam, seal, and upper closing points. The fiber-reinforced panel sheets are homogenous in thickness and construction, having the same properties throughout, with no ability to create breathability unless holes or perforations are cut into the sheet. Flexibility of the material is dependent on thickness and length and width of the cut pieces. FRP sheets require a lengthy process to create materials in sheets to be used in fabrication. An example is carbon fiber which can be five times as strong as steel and twice as stiff as compared with the same unit of weight. Each carbon fiber is typically five to ten microns in diameter and is made from organic polymers. Several thousand of these very small fibers are twisted together to form a strand. During a strand making process, the strand is impregnated with a resin, so-called called `prepreg' as described above. Carbon fiber can be woven into a twill fabric format from 'prepreg' or un-resonated stands. In the case of un-resonated fibers, a mold is selected, and a mold release is applied. The fabric is cut into the desired shape then laid-up in the desired geometric configuration of the mold and resin is applied. A layer of plastic-coated absorbing material is applied on top. The air is vacuumed out, pulling the resin into the carbon fabric, and then the assembly is left to harden. The absorbing fabric and plastic are removed, and the carbon reinforced polymer component retains the shape of the mold.

Carbon fiber is also resistant to chemicals and tolerant to high temperatures while exhibiting low thermal expansion. Because of its strength, corrosion resistance, lightness in weight, and flexibility, carbon fiber is regarded as a suitable material for footwear uppers, shoe soles, and supportive components of footwear. However current methods of utilizing carbon fiber and other fiber-reinforced polymers in footwear require sourcing, purchasing, stocking, handling, cutting, bundling of both usable pieces and scrap, as well as specialized care in disposal of a very durable scrap composite material, which will last indefinitely in a landfill. Handling, cutting, and managing fiber-reinforced polymer material sheets, including carbon fiber, requires special safety precautions, specialized cutting equipment.

Recent advancements in manufacturing knitted footwear uppers have utilized flat V-bed weft knitting machines to shape uppers. However, most knitted footwear uppers still have seams, typically at the heel, medical arch, or other places on the foot. Seams create pressure points on the foot, resulting in blisters and other irritations as well as potential structural failure points. Employing a stiff polymer reinforcing fiber material, such as carbon fiber, to create a knitted upper with seams increases the potential for discomfort, and opportunity for seam failure.

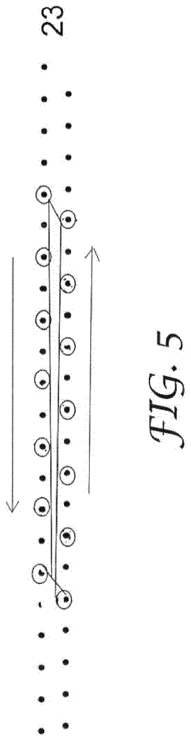

Other conventional knitted footwear uppers created without seams are typically sock-like jersey-based fabrications. FIG. 5 is diagram showing the technical loop in a sock-like structure in half-gauge tubular knitting on a flat knitting machine. The texture is knitted in half-gauge 23 jersey fabric, which usually requires additional reinforcement materials to be applied to the upper to stabilize the skewing.

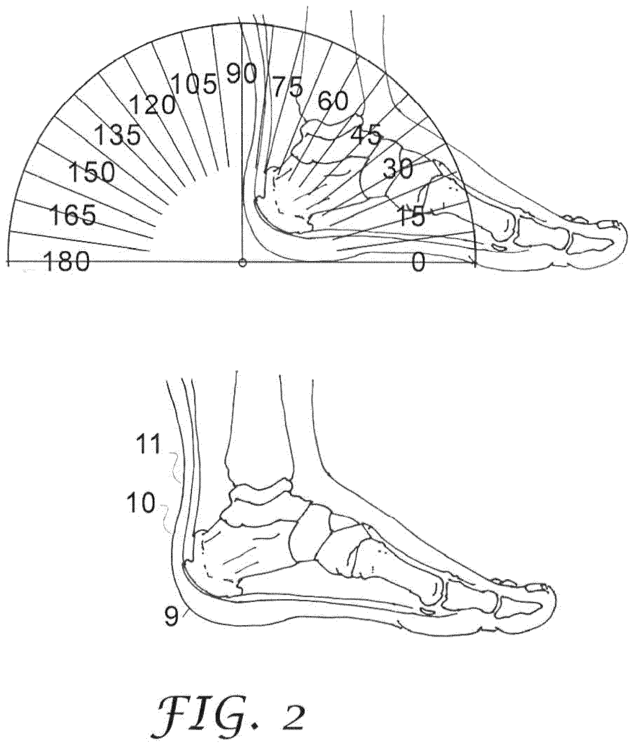

Both types of the above described conventional knitting of footwear uppers fit poorly, due to the limitations of existing short rowing technique. Particularly, the resultant heel angle in a footwear upper is less than anatomically appropriate. FIG. 2 is a diagram showing the anatomy and angle of a heel on a human foot as compared to its sole and or a flat surface. Acute heel angles in a footwear upper, which are less than anatomically appropriate, may dramatically affect fit and comfort by creating pressure, pain, inflammation, swelling, and discomfort to the soft tissue of the foot including the plantar fascia 12, heel pad 9 , Achilles tendon 11, skin of the calcaneal area 10, as well as other areas of the foot. Less than anatomically appropriate shaping of the heel may cause blisters, injury to the skin and Achilles tendon itself, as well as affect gait and expand the discomfort to legs, hips, back, and neck. Stiff materials amplify all the discomfort, especially in the heel area.

A stiff FRP material (such as carbon fiber) can be used to create a knitted upper in a 'sock-like' tube shape (where the entire upper or a majority portion of the upper is a stiff polymer reinforcing material) which comprises a three-dimensional, completely polymerized composite sock-like upper. This may present three-dimensional molding challenges, as well as donning and doffing difficulties for a user to don and doff.

Patent publication document US 2018/055145 A1 is thought to be relevant to the claimed invention.

### SUMMARY OF THE INVENTION

The invention is set out in the appended claims. Embodiments of the present disclosure provide a mechanism of producing fully- finished three-dimensionally weft knitted footwear. A V-bed weft knitting process can integrate the generation of polymer reinforcing fiber composite shoe uppers, polymer reinforcing fiber shoe upper liners, and weft knitted polymer reinforcing fiber footwear components. The uppers, liners, and footwear components, are created in a truly unitary construction, which is completed by the knitting machine through a knitting process. It requires no cutting of excess materials or a seaming element to close the upper to receive a foot.

According to embodiments of the present disclosure, stiff materials can be fed into a V-bed weft knitting machine, with nearly zero scrap waste of the strands used to fabricate knitted fabric, while also creating completely finished edges of the upper and any additional knitted textile elements, exclusively by the knitting machine. The knitting machine may create thick and thin zones as functionally or aesthetically desired, and incorporate additional materials in the same knitting process to enhance the performance and/or characteristics of the fiber-reinforced polymerized material, such as silicon, high heat resistant ceramics, vitreous silica, thermo coupling wires, thermo shielded electronic cable, braids, aramids, para aramids, and other specialized materials.

The resulting three-dimensional textile element is a unitary construction completed entirely by the knitting machine in the knitting process and is ready for subsequent polymer resin application and/or a molding process. Knitting fiber reinforcing materials to the desired shape of an upper, upper liner, or footwear component greatly simplifies the final structuring process, where resin is added to the material in a mold, or in the case of resin pre-impregnated materials, the knitted textile may be molded. The enhancing materials added can survive the resin polymerization process and/or molding process and are thereby permanently embedded in the upper, upper liner, and/or components.

In some embodiments, an unspooling system used in the knitting process allows more than two unspooled materials to be knitted into the same construction, with reduction in the number of angles the stiff and/or conductive materials travel, reduction in friction, and reduction of wear and machine breakage. One or several unspooling devices may be used on most flat knitting machine types and brands, and are mounted on the OEM stop motion bar, or several in the same space next to a machine, saving valuable floor space. Adding additional unspooling devices allows for various options of additional materials to be integrated to the construction, such as fiber reinforcing material such as aramids, auxetic materials, metals, wire, natural and synthetic fibers. Numerous materials may be knitted into one or more types of knit structures, into one or more zones or additional components with differing materials and constructions attached in the same knitting process.

A knitting process according to embodiments of the present disclosure can create an amorphous textile structure, where fibers are knitted into a three-dimensional shape and the knit may be varied and structured into zones for a desired end use. The resulting textile construction is further processed with the addition of polymer into an FRP composite; co-molded with other materials to create functional zones; processed as a fiber, which is pre-impregnated with resin (pre-preg) and molded into shape with heat and pressure. The fiber structure may be curved multi-directionally in the knitting process into a void to receive, support, and/or hold a foot. Varying the fibers in zones to map desired functions may advantageously create a flexible, dynamic structure, which may be very light weight and comfortable, as compared to the current process of fabricating homogenous two-dimensional sheets of composite material. Embodiments of the present disclosure can advantageously eliminate seaming in both the textile upper creation process and the polymerization process by creating a finished fiber upper in a unitary textile construction shaped entirely by the knitting machine, e.g., ready for the polymerization process. Embodiments of the present disclosure can advantageously eliminate substantial waste associated with both the textile upper creation process and the polymerization process. The knitting process can advantageously create a stable and finished upper in a unitary seamless textile construction that is shaped entirely by the knitting machine and ready for the polymerization or molding process. Thus, it requires no cutting and joining of composite components.

In some embodiments, a mold with open spaces may be utilized, such as a grid, or portions where polymer is not applied, to create a strong breathable structure for 'caging' a foot and holding it in motion. In some embodiments, appendage structures for support and/or aesthetic applications are knitted in the same knitting process of knitting the shoe upper, eliminating the need for external sub-assemblies and management of extra processes, materials, and scrap.

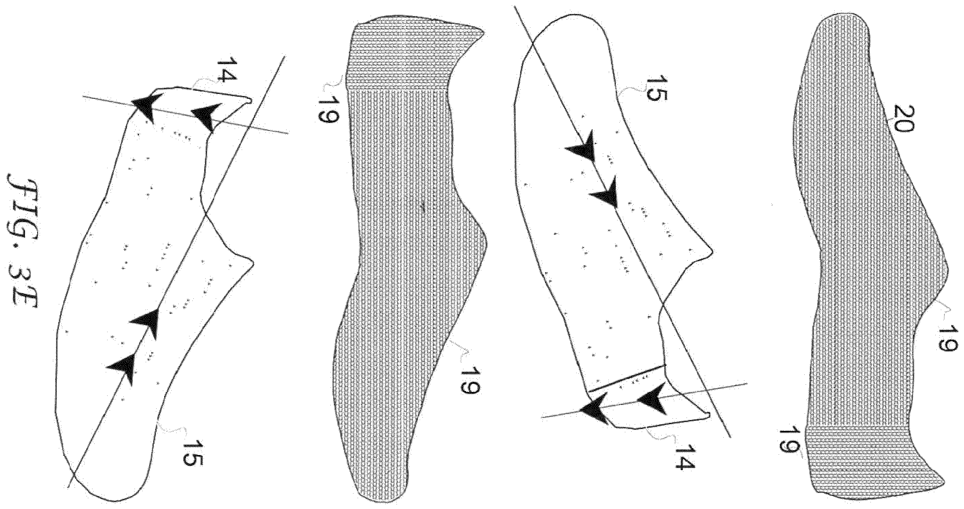

The weft knitted unitary construction resulting from an exemplary knitting process has an anatomically appropriate angle of the heel (as shown in FIG. 2). This can be achieved by utilizing the four-needle-bed technology to join facets of the double-knitted upper in steep, right, and obtuse angles to fit the anatomy of the foot (as shown in FIG. 3E). In some embodiments, the weft knitted unitary construction resulting from an exemplary knitting process may include a sole and/or insole structure which can be attached in a post-process.

The weft knitted unitary construction created by an exemplary knitting process integrates one or more additional materials, for example including a fiber reinforcing material, such as aramids, auxetic materials, metals, wire, natural and synthetic fibers. Materials may be knitted into one or more types of knit structures and into one or more zones. The textile structure created in an exemplary knitting process may encompass a whole construction that encapsulates the foot, in a sock like manner, where a majority or a portion of the unitary sock-like construction is polymerized, providing protection and/or other functions where needed for the end use. Such a sock-like construction may be used as an upper, a liner, or layer of an article of footwear.

In some embodiments, one or more dynamic feeding systems may be utilized on a knitting machine to unspool packages of materials and feed them into a V-bed knitting machine, thereby enabling deployment of three or many more materials simultaneously into the polymer reinforcing structure in the knitting process. The knitting machine may be controlled by a computer program.

### BRIEF DESCRIPTION OF THE DRAWINGS

The embodiments can be better understood with reference to the following drawings and description. The components in the figures are not necessarily to scale, emphasis instead being placed upon illustrating the principles of the embodiments. Moreover, in the figures, like reference numerals designate corresponding parts throughout the different views.
FIG. 1A is a diagram demonstrating various composite fiber alignments.
FIG. IB is a diagram demonstrating the components of a composite material.
FIG. 2 is a diagram demonstrating the parts and angle of a normal heel on a human foot as compared to its sole and or a flat surface.
FIG. 3A are diagrams of grain lines of the heel and body of a seamless article of footwear according to the claimed invention produced on a two-needle-bed knitting machine with double bed fabric using short rowing.
FIG. 3B is a loop diagram of the heel area of a knitted-to-shape three-dimensional semi-finished textile upper according to the claimed invention using short rowing.
FIG. 3C is a loop diagram of the heel area of a seamless article of footwear according to the claimed invention produced on a two-needle-bed knitting machine with double bed fabric using short rowing.
FIG. 3D is a loop diagram of the heel area of a seamless article of footwear according to the claimed invention produced on a four-needle-bed knitting machine with double bed fabric and seamlessly inserting or joining the facets of said supportive panel, where that angle is a steep, right, and or an obtuse angle.
FIG. 3E are diagrams of grain lines of the heel and body fabrics of a seamless article of footwear according to the claimed invention produced on a four-needle-bed knitting machine with double bed fabric and seamlessly inserting or joining the facets of said supportive panel, where that angle is a steep, right, and or an obtuse angle.
FIG. 4A is a diagram of weft knitting, and the horizontal directions by which strands are inserted into fabric and entangled to create `weft' knit fabric.
FIG. 4B is a diagram of latch needles used in weft knitting, engaging the strands, which are inserted into the knitting machine, the fabric technical jersey knit face and technical jersey purl back created on either front or rear needle bed.
FIG. 5 is a technical loop diagram of a sock-like structure in half-gauge tubular knitting on a flat knitting machine.
FIG. 6A is a side view diagram of the positioning of the needle beds and latch needles of a two-needle bed flat V-bed knitting machine.
FIG. 6B is a side view diagram of the positioning of the needle beds and latch needles of a two-needle bed flat V-bed knitting machine with two additional auxiliary beds and transfer points.
FIG. 6C is a side view diagram of the positioning of the needle beds and latch needles of a two-needle bed flat V-bed knitting machine with two additional auxiliary beds and transfer points, yam rails, yam feeders, yam strand cone packages, strands feeding into the machine.
FIG. 6D is a front view diagram of a V-bed flat weft knitting machine.
FIG 7A is a diagram of two-dimensional roll goods with two-dimensional footwear upper pattern pieces to be cut and waste material.
FIG. 7B is a diagram of a knitted-to-shape two-dimensional footwear upper according to the claimed invention with one or more knit textures.
FIG. 7C is a diagram of a knitted-to-shape three-dimensional footwear upper according to the claimed invention with one or more knit textures.
FIG. 7D is a diagram of a knitted-to-shape three-dimensional footwear upper according to the claimed invention with one or more knit void paces, creating a cage.
FIG. 7E is a diagram of a knitted-to-shape three-dimensional footwear upper according to the claimed invention with one or more knit components, including a tongue component attached at the toe, a sole attached at the heel, and side flange components attached at the sides.
FIG. 7F is a diagram of a knitted-to-shape three-dimensional footwear upper according to the claimed invention with a second knitted-to-shape three-dimensional footwear upper, which is stacked to create an article of footwear.
FIG. 7G is a diagram of a knitted-to-shape three-dimensional footwear upper according to the claimed invention, having a warp integrated technique; a second knitted-to-shape three-dimensional footwear upper, which is stacked to create an article of footwear.
FIG. 8A is a diagram of a standard OEM stop motion feed unit, right side view.
FIG. 8B is a diagram of a standard OEM stop motion feed unit and electronic cable, left side view.
FIG. 8C is a diagram of a standard OEM stop motion feed unit bottom view.
FIG. 9A is a diagram of a seamless weft knitted article of footwear with an integrated heel joined in the same knitting process, plus: heel component attached at the heel, entirely by a weft knitting machine, and emerging from the knitting machine in a unitary construction - side view.
FIG. 9B is a diagram example of a standard OEM yarn feeder from a Stoll CMS ADF weft knitting machine.
FIG. 9C is a side view diagram of a sequential series of essentially the same seamless uppers emerging from the knitting machine.
FIG. 9D is a side view diagram of a sequential series of differing seamless uppers emerging from the knitting machine.

### DETAILED DESCRIPTION

Reference will now be made in detail to the preferred embodiments of the present invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, within the scope of the invention as defined by the appended claims. Furthermore, in the following detailed description of embodiments of the present invention, numerous specific details are set forth in order to provide a thorough understanding of the present invention. However, it will be recognized by one of ordinary skill in the art that the present invention may be practiced without these specific details. In other instances, well-known methods, procedures, components, and circuits have not been described in detail so as not to unnecessarily obscure aspects of the embodiments of the present invention. The drawings showing embodiments of the invention are semi-diagrammatic and not to scale and, particularly, some of the dimensions are for the clarity of presentation and are shown exaggerated in the drawing Figures. Similarly, although the views in the drawings for the ease of description generally show similar orientations, this depiction in the Figures is arbitrary for the most part. Generally, the invention can be operated in any orientation.

Fabricating partial components ready for molding or resin application to create an article of footwear requires many steps and processes. Embodiments of this invention allow one or more knitted components to be formed exclusively in a knitting process and integrated in a footwear upper, ready for molding or resin application to create a final article of footwear.

Embodiments of the present disclosure provide a system and method of creating three-dimensionally shaped polymer reinforcing fiber footwear uppers, and/or an upper liner, and/or semi-finished components to be formed in fiber reinforcing textile material on a V-bed flat knitting machine. In some embodiments, an upper liner, and/or components can be knitted to appropriate shape in a separate process and then attached to the body of the upper in a post process. In some other embodiments, the liner and/or components may be knitted to appropriate shape and attached to the body of the upper in the same knitting process. The body of the upper or a liner is made seamless, having no seams, seal points, or closure points, and can be knitted exclusively utilizing the knitting machine with no human intervention.

An exemplary knit process creates a seamless, three- dimensionally shaped footwear upper, as a unitary textile construction with an integrated anatomically appropriate heel. An entire upper may be completed exclusively by using the knitting machine and thereby rendered ready for the polymerization (resin application), or in the instance of resin pre-impregnated stands, the molding process, and then the shoe making process.

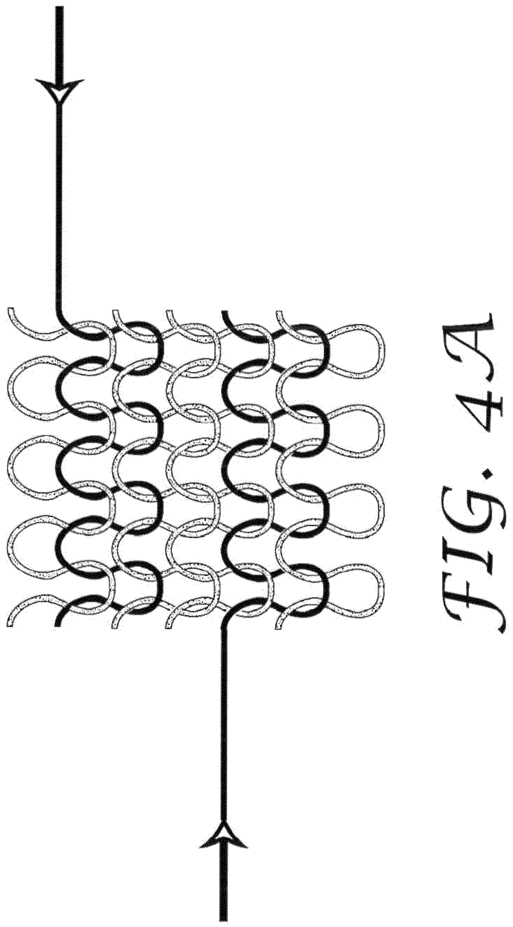

The term "weft knitting" is used to describe the construction of fabric by feeding yam and forming loops in the horizontal ("weft") direction, FIG. 4A is a diagram showing weft knitting, and the horizontal directions by which strands are inserted into fabric and entangled to create `weft' knit fabric.

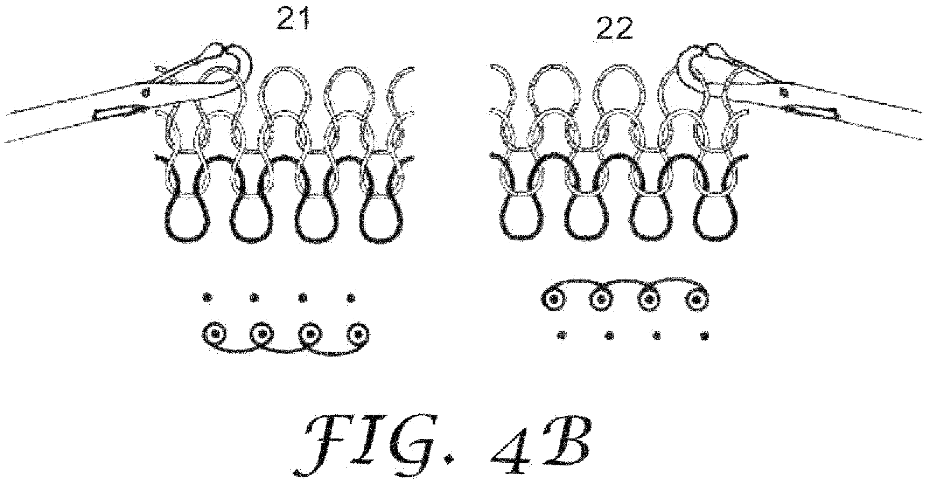

The term "V-bed knitting" or "flat-bed knitting" refers to a weft knitting technique that feeds yam and forms loops with at least two opposing needle beds, where latch needles and other elements are selected and slide during the knitting process to engage strands of material and thereby to create a fabric. FIG. 4B is a diagram of latch needles used in weft knitting and in the fabric technical jersey knit face and purl back created on either a front or a rear needle bed. As shown, the latch needles engage the strands, which are inserted into the knitting machine. A technical face 21 and a technical back 22 of the fabric, and a grain, are shown by the directions of the loops.

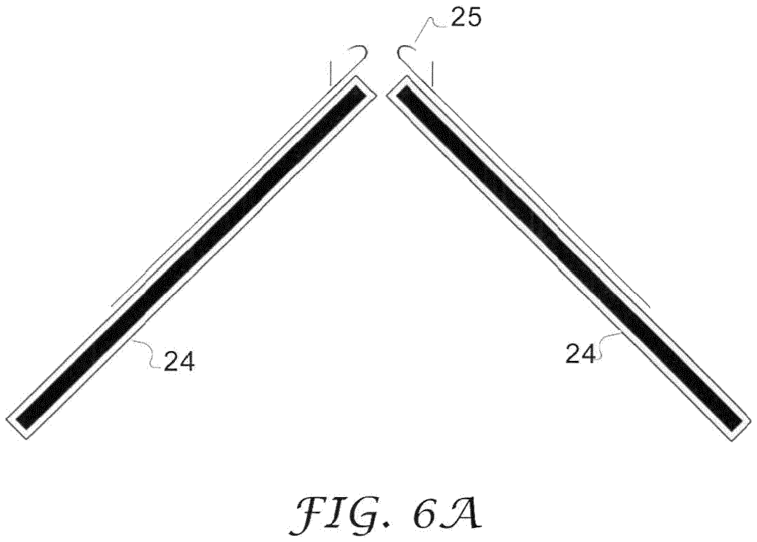

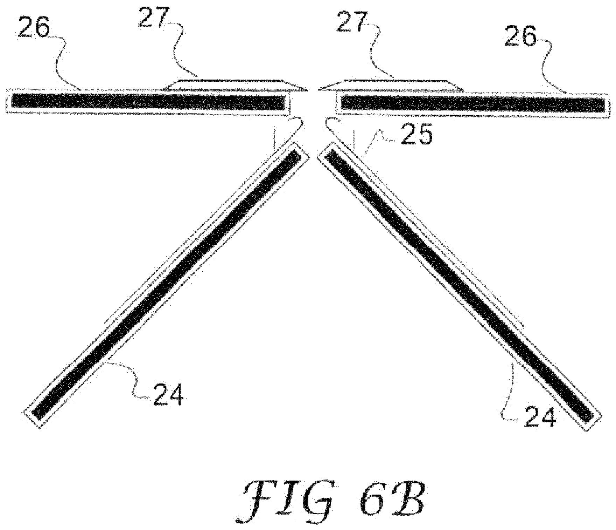

FIG. 6A is a side view diagram of the positioning of the needle beds and latch needles of a two-needle bed flat V-bed knitting machine. In V-bed flat knitting, the needle beds are positioned at an angle resembling a "V" shape. Each bed 24 has a set of hundreds of needles 25. FIG. 6B is a side view diagram of the positioning of the needle beds and latch needles of a four-needle bed knitting machine, including two-needle bed flat V-beds with two additional auxiliary beds and transfer points. The four needle bed machines can be the Shima Seiki Mach2X and the H. Stoll AG & Co. KG 730T, and 530T Electronic flat knitting machines, for example. As shown, the four-needle bed machine has two needle beds 24 with hundreds of needles 25, and additionally have auxiliary needle beds 26 with hundreds of fashioning points and/or needles 27, which correspond to the same spacing and occurrence of needles in the beds below 24.

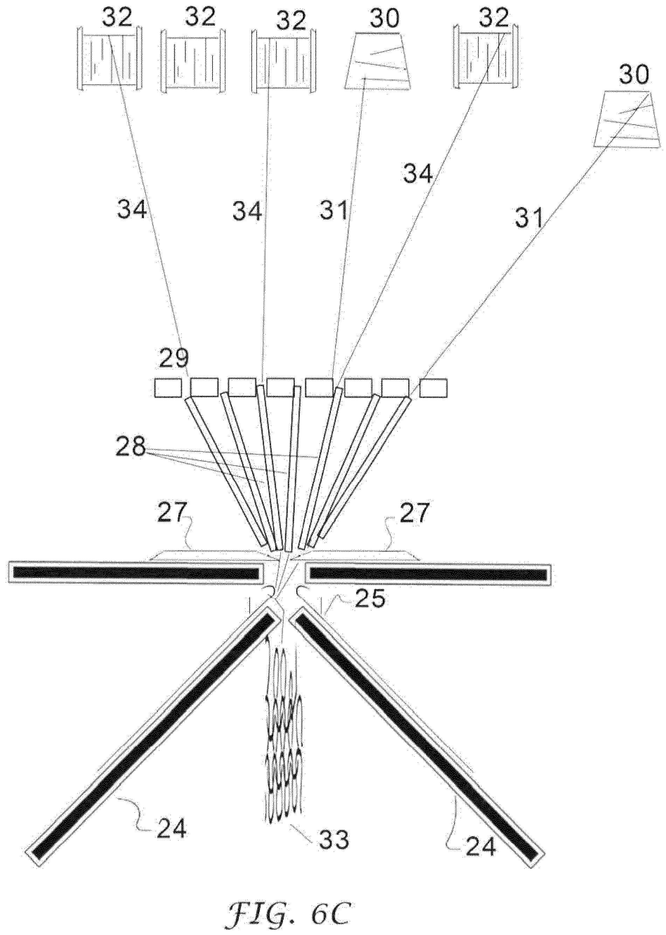

FIG. 6C is a side view diagram of the positioning of the needle beds and latch needles in an exemplary knitting machine which has a two-needle bed flat V-beds with two additional auxiliary beds in accordance with an embodiment of the present disclosure. FIG. 6C also shows the transfer points, yam rails, yam feeders, yarn strand cone packages, strands feeding into the machine in accordance with an embodiment of the present disclosure. In both two needle bed machines and four needle beds machines, strands of material 30 on cones or spools 32 are fed 31 into feeders 28. Several feeders are located on each machine and run along rails 29 in a horizontal direction. The strands run through the feeders and are manipulated by both the feeders along the length of a pre-programmed length of the needle bed 24 also in the horizontal (weft) direction, while activating and knitting needles 25 to act in interlacing of the strands into loops. The resulting fabric 33 exits the machine under the needle beds.

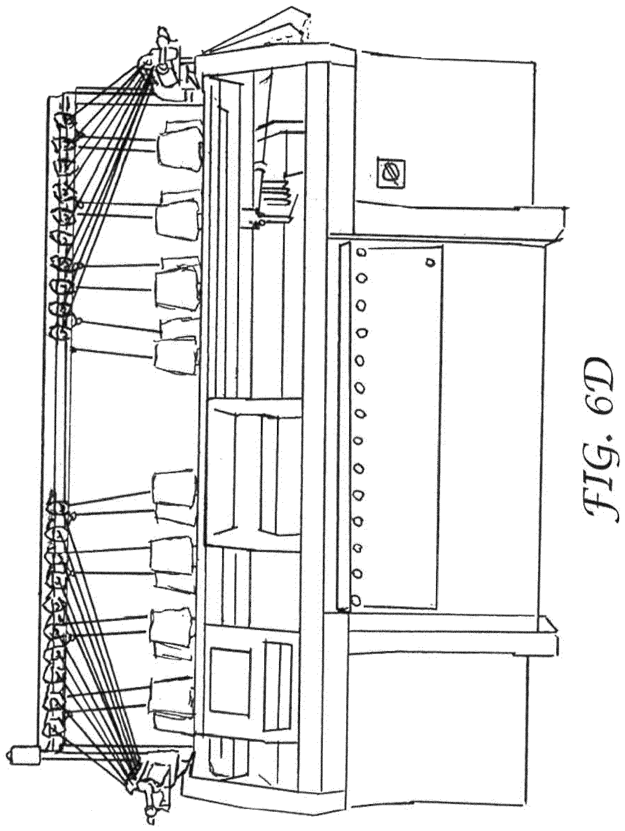

FIG. 6D is a front view diagram of an exemplary V-bed flat weft knitting machine that is configured to automatically select the needles and other elements via mechanical and digital instruction process as by control of a computer program in accordance with an embodiment of the present disclosure. The computer program can control the V-bed flat weft knitting machine to execute knitting processes as described herein.

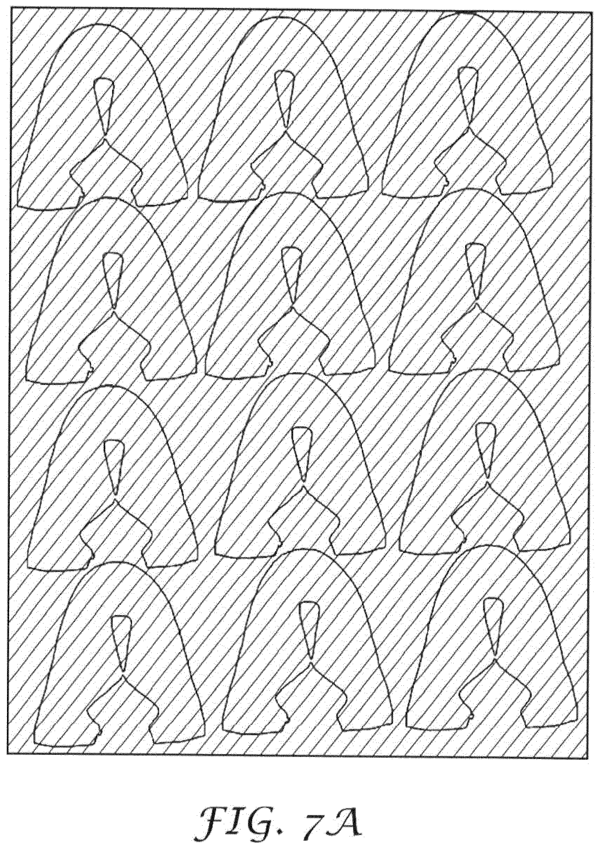

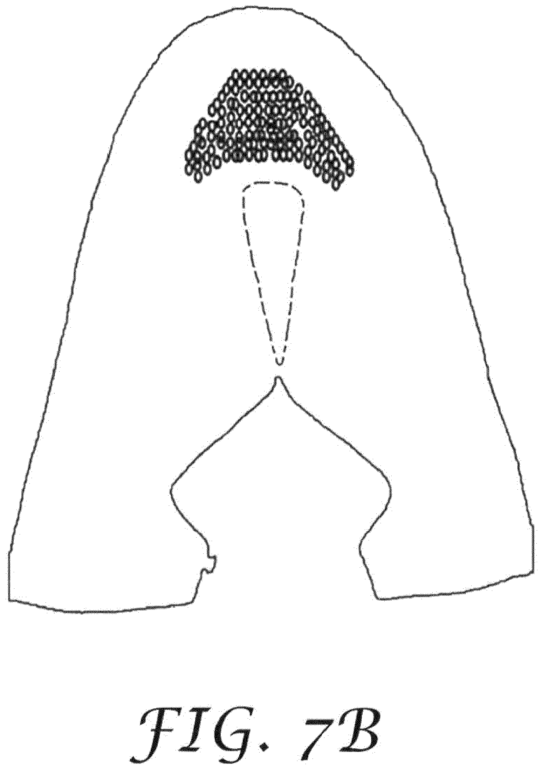

For shaping V-bed weft knitted fabric into an upper, there are three main approaches currently utilized: cut-and-sew, fully fashioned, and whole garment technique. The cut-and-sew approach involves cutting fabric, usually roll goods or fabric blocks, and sewing the cut pieces to fashion an upper. FIG 7A is a diagram of two-dimensional roll goods with two-dimensional footwear upper pattern pieces to be cut. These semi-finished textile components are made into finished uppers by combining the knitting process and additional finishing processes such as: knitting two-dimensional rectangular textiles, knitted as plain fabric or with a shoe motif, then die cutting to the respective footwear shape, finishing raw edges, and sewing into a complete upper with a seam closing up the heel, toe flex, or medial arch. FIG. 7B is a diagram of a knitted-to-shape two-dimensional footwear upper with one or more knit textures.

Cutting creates scrap and requires readying cut pieces for the production process, including sorting, retarding fraying, coordinating timing, lot matching, and bundling. The cut-and-sew method for common textiles generates a significant amount of scrap waste, is labor intensive, and the stitching results in bulky seams. Fiber-reinforced polymer uppers are commonly made this cut-and-sew method, where uppers, soles, toe inserts, and/or sole plates, are cut from a two-dimensional sheet of carbon fiber, or other FRP, sometimes layered, and the scrap FRP is discarded. These scraps rarely can be used for other purposes and last an extremely long time in a landfill due to the very reasons of near indestructibility for which this material is used.

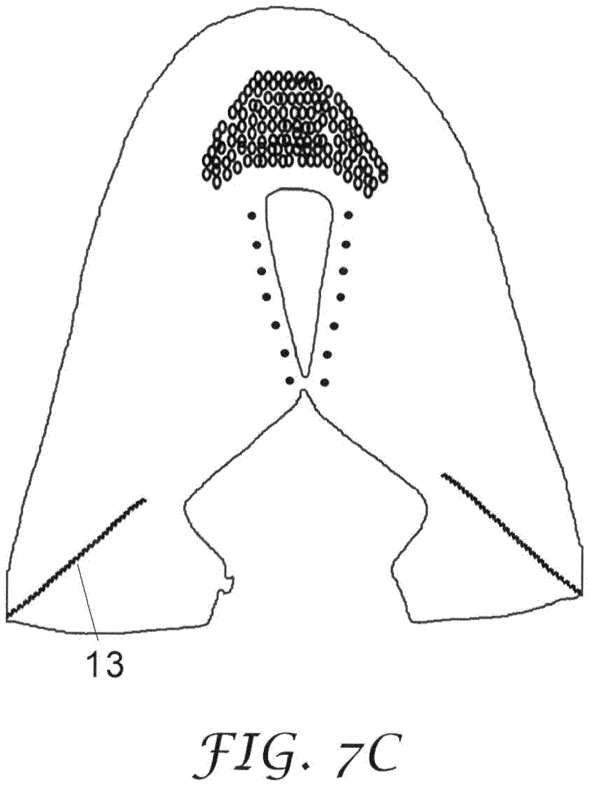

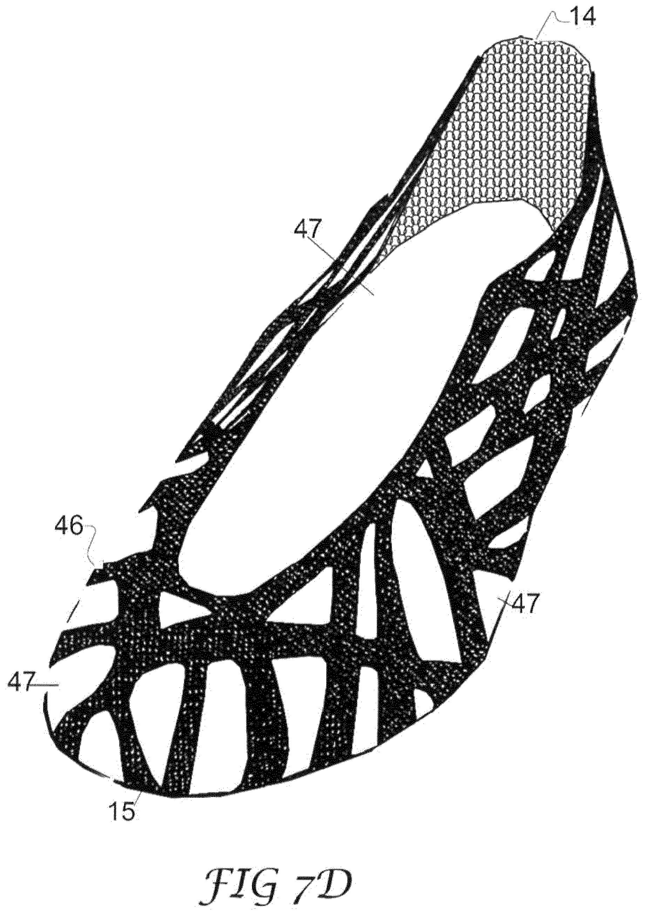

The fully-fashioned approach involves knitting semi-finished panels to shape in two or three-dimensions, and then assembling the shaped pieces in a post process. FIG. 7C is a diagram of an exemplary knitted-to-shape three-dimensional footwear upper with one or more knit textures in accordance with an embodiment of the present disclosure. FIG. 7D is a diagram of an exemplary knitted-to-shape three-dimensional footwear upper with one or more knit void paces, creating a cage, in accordance with an embodiment of the present disclosure.

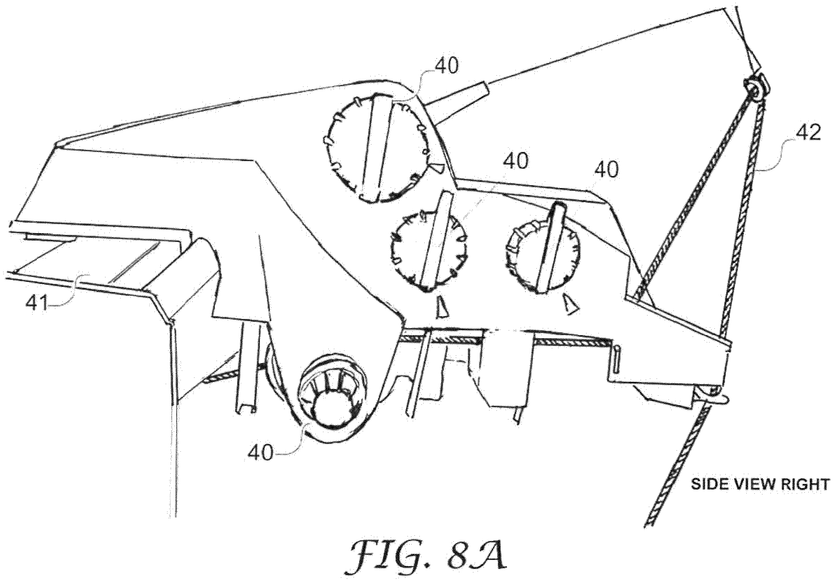

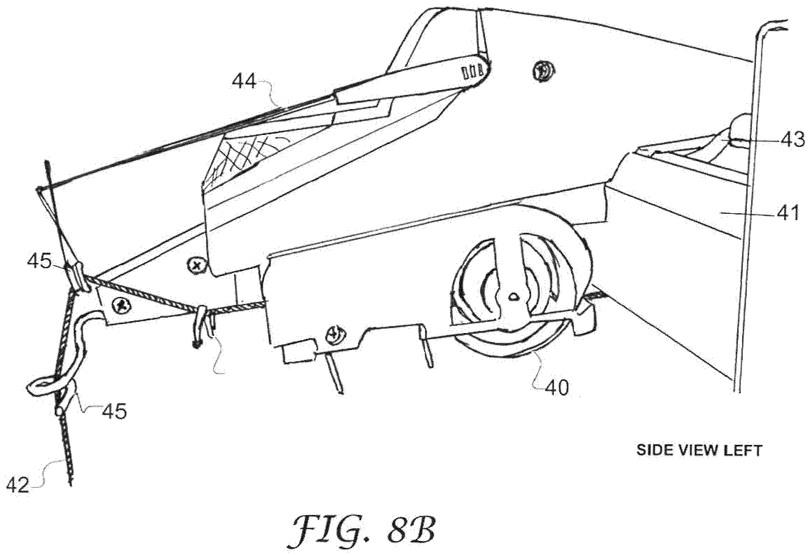

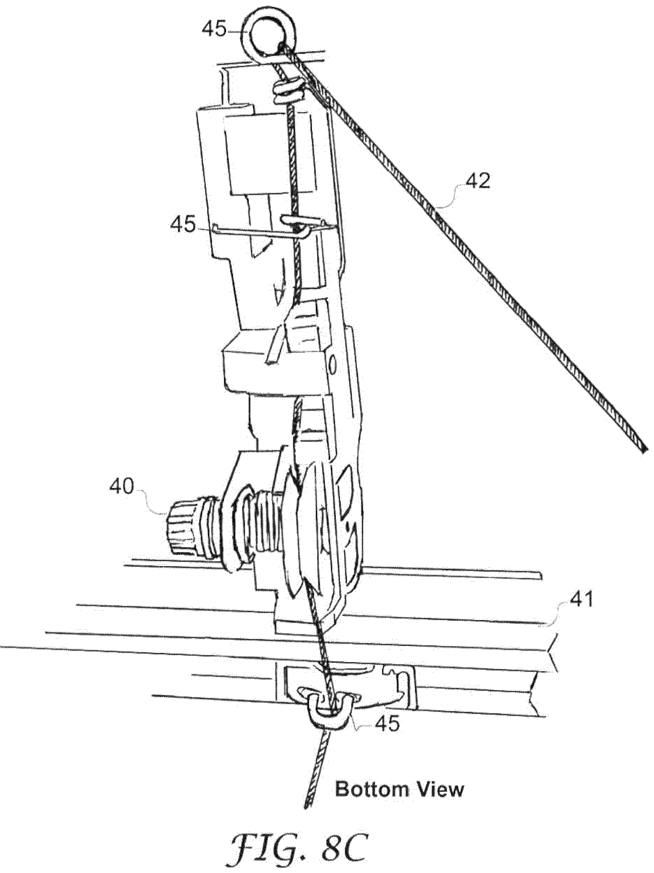

Seaming and sealing FRP materials are tasks subject to human error and fatigue in the seaming process. Seams create potential points of functional failure while also creating potential pressure points on the foot, resulting in blisters and other performance and/or user irritations. In the case of carbon fiber, fiber reinforcing materials, stainless steel, polyurethane coated, or other stiff fibers, these potential problems are increased at the seaming points. Unlike common textile materials, introducing Fiber-reinforced Polymer materials, chain, wire, or other materials to a standard OEM knitting machine causes several challenges. Current methods of knitting carbon fiber and other fiber reinforcing textiles, integrating stainless steel, wire, heating elements, chain, or other stiff fibers, pose challenges to the 'de-packaging' and feeding of those materials into a conventional knitting machine utilizing standard OEM stop motions and standard OEM feeders. Standard stop motions, which are mounted on a stock OEM bar 41 above the needle beds, have built in manual tensioning controls 40. FIG. 8A is a diagram of a standard OEM stop motion feed unit, right side view. FIG. 8B is a diagram of a standard OEM stop motion feed unit and electronic cable, left side view. FIG. 8C is a diagram of a standard OEM stop motion feed unit bottom view.

As shown in FIG 8B, the stock OEM bar 41 has an electronic cable 43 inside a groove, which connects each stop motion to the machines main computer system. Stiff material, such as carbon fiber, must bend several times (as shown by the bent portion 42) through multiple right, obtuse, and acute angles as it passes through these standard OEM fittings and guides 45, causing a significant amount of friction, static build up that can damage machine computers and other machine electronics, breakage of fiber, excessive wear on the machine parts, drag of fiber slowing down production, and many other complications. Carbon fiber, wire, and many other materials are typically packaged on a spool 32 (see FIG. 6C), a cylinder, or a cone, which, when deploying material, can cause the material to balloon on itself and spiral into a coil and breaks as previously described. The drag also causes friction, damaging parts, but also in the case of conductive materials causes electronic parts and computer systems to error.

Currently, the alternative to standard OEM stop motions unspooling materials is using one of two devices from a machine builder, depending on which machine type the user is utilizing. Machine builders (such as Shima Seiki of Japan, and H. Stoll AG & Co. KG of Reutlingen Germany) have created unspooling devices to address such 'de-packaging' or unspooling of materials on spools, cones, and cylinders which pose such problems. Both companies have large unspooling devices mounted on the floor or beside a machine, which feed up to two of these materials into a knitting machine. For simple products, one or two strands can be fed into a standard knitting machine, and expensive additional unspooling equipment is available from knitting machine manufacturers.

However, knitting a more complex structure, using more than two strand feeds on standard machine builder equipment, such as that used to create an article of footwear, requires several automatic unspooling devices. The unspooling devices remove material from a spool and reduces drag, while also orienting stiff material, such as carbon fiber, hemp, flax, jute, fiber glass, and other fiber reinforcing materials. Additional unspooling devices may also be used to unspool silicon, auxetic strands, reflective ribbon, high heat resistant ceramics, vitreous silica fibers, thermo coupling wires, metal, braids, aramids, para aramids, and other specialized materials, which may also be used in the same knitting process. As shown in FIG. 6C, one or more unspooling devices may be used on one knitting machine to drive a plurality of strands of carbon fiber, wire, or other special materials off one or a plurality of spools 32, cones 30, or other packages, in coordination with the movement of the knitting machine's feeder system 28.

In weft-knitting, there are various ways to reduce seams, which have been applied to knitting footwear uppers into one piece, rather than the typical leather-industry based process of assembling three to five components into an upper. A widely employed manufacturing technique to eliminate seams is utilizing two-dimensional roll-good fabric (as shown in FIG. 7A), cutting around the design, and assembling. Common textiles typically have the elasticity to "give," and a fabric can be eased around curves. Unfortunately, FRP materials do not give, and this lack of stretch is one of the reasons they are used for protective and structural purposes.

The fit of a common textile shoe made by cutting a 'U-cut' upper or 'strip-cut' upper from a roll good, does not have the `spring effect' at the instep, where one eye stay overlaps another, accommodating the curve of the instep and providing adequate room and comfort for a foot. Cutting a 2-dimensional FRP sheet material, using this method to create a U-shaped upper, then bending it in assembly in the curves of a foot, creates many pressure points, seams, and result in a poor fit. Cutting the material also releases fibers, which may stick out and poke the wearer if extreme care and effort is not taken to remove and polish the cut edges.

A hybrid manufacturing method for fabricating common textile materials involves knitting a two-dimensionally U-shaped or strip-shaped fabric format (fully-fashioning), optionally die cutting the tongue area (as shown in FIG. 7B), finishing raw edges, and sewing into a complete upper with a seam closing up the heel, toe flex, or medial arch. As described above, seams create discomfort, an FRP material does not "give" in several areas (including the eye stay), which is not able to "spring" together to provide adequate comfort. Die cutting releases fibers, which needs additional care and finishing in an post-process.

Another hybrid manufacturing process employed in upper manufacturing common textile materials involves knitting a two-dimensional upper to shape in a flat strip and wrapping the foot and seaming in the medial arch or toe flex area, or in a butterfly format (as shown in FIG 7B), which does "spring at the instep," and then sewing the butterfly shape to close up the heel in one or more post processes. Alternatively, the method involves knitting three-dimensional seamless, finished unitary upper construction with integrated components, and sewing to close up the heel, toe flex, or medial arch in one or more post processes.

Fully fashioning an upper polymer reinforcing fiber saves considerable material, which would otherwise be cut away, in a cut-and-sew process, or cut and discarded after polymerization. But the fully-fashioned upper requires a post process to finish the upper ready for the shoe making process and, in this case, the polymerization process, which occurs before the shoe making process. In fashioning an upper on a two-needle bed flat knitting machine (as shown in FIG. 7C), a typical wedge knitting (short rowing) technique is used to turn the heel grain, and other portions of the upper, such as the toe, the instep and the ankle areas.

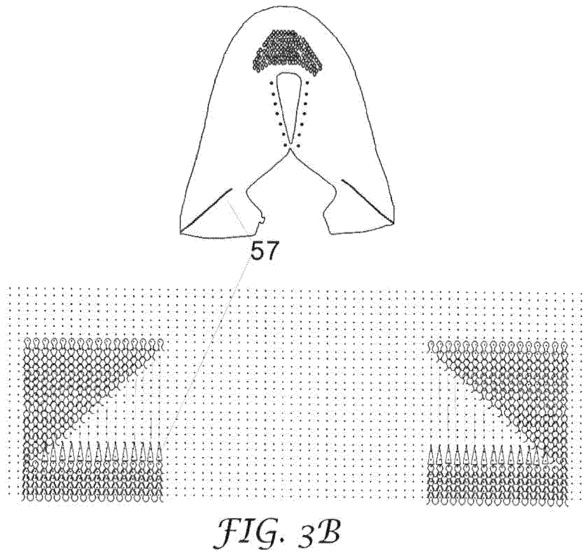

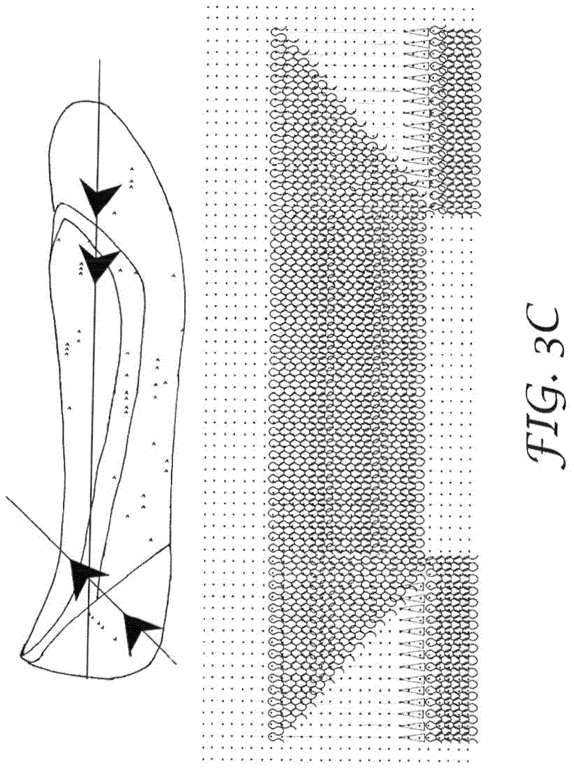

FIG. 3B is a loop diagram of the heel area of a knitted-to-shape three-dimensional semi-finished textile upper using short rowing, the fabric shaping on two-needle bed machines, using short row (wedge) knitting, has limitations of increasing or decreasing by one- needle wide and by one-needle high at a time, creating an acute angle, which is subject to variations in materials. Short-rowing cannot make a right angle. Increasing or decreasing by more than one-needle wide or by one-needle high creates stress on the knitting strand and the knitting needles in pulling a long loop 57, which spans a space two or more times longer and wider, than the original loop. The result is a fail in knitting and/or a high stress fault line in the fabric that may not endure abrasion, tensile stretch and recovery, or the shoe making process. Carbon fiber and other fiber reinforcing materials are inherently stiff. Stretching loops of fiber reinforcing material farther than one-stitch width at a time may actually cause serious damage to the knitting needles and other parts of the knitting machine. Utilizing this short rowing (wedge knitting) technique one-stitch width and height at a time creates a semi-finished upper (as shown in FIG. 3B), which requires a seam to join the sides, completing the upper's shape. Seamless double-bed knitted uppers are currently created by knitting these afore-mentioned short row technique. FIG. 3C is a loop diagram of the heel area of a seamless article of footwear produced on a two-needle-bed knitting machine with double bed fabric using short rowing

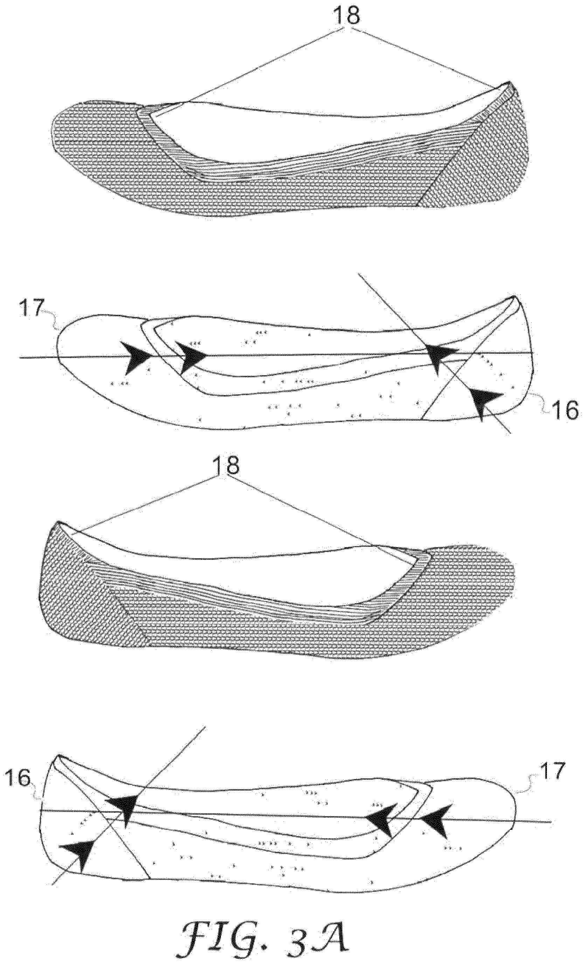

FIG. 3A are diagrams of the grain lines of the heel and body of a seamless article of footwear produced on a two-needle-bed knitting machine with double bed fabric using short rowing. As shown, shaping typically starts at the heel, which limits the angle 16 of the heel to between thirty-five and seventy degrees, much less than ninety-degrees from the body of the upper 17. Depending upon the material qualities, the angle of the heel and other areas of current double bed uppers are limited by mechanical transferring constraints of two-bed flat-knitting machinery, and also the structure of double bed fabrics in general. Utilizing this wedge knitting technique (short rowing), there is no transferring of double-bed fabric loops, but only adding of new rows of loops in a wedge like shape (short rowing as shown in FIG. 3C), which is a standard and historically used weft-knitting technique. Short rowing distorts the fabric grain on an angle. The accuracy of repeating the angle is subject to many variations, including material qualities, dye content of yarns, elasticity of yarn, size of yarn strand, tightness of the stitches, calibration of the machine, and other factors affecting material and machine consistency. Increasing or decreasing the degree of the short row angle is limited by one-needle in the X direction by one-needle in the Y direction, as described above. Moving more than this one-needle wide by one-needle high stretches loops and creates potential failure points as also described. Stiff polymer reinforcing fibers, wires, Kevlar or other materials described herein, are not stretchable.

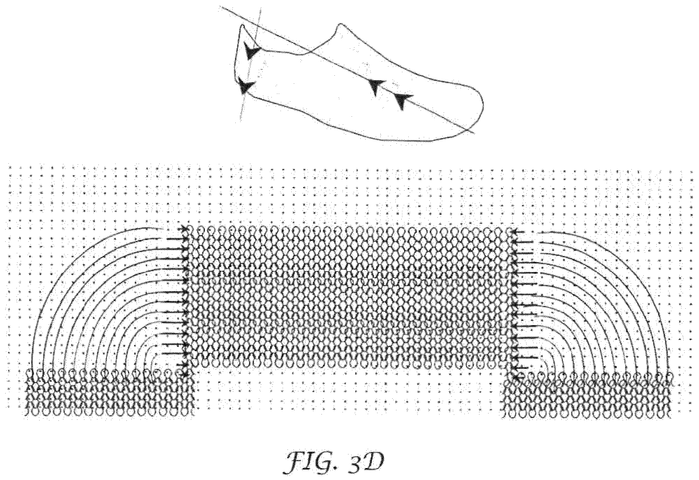

In a claimed embodiment of the present disclosure, an insert is knitted in the heel section. The insert may be adjacent to the side of the rear of the upper. The insert is manipulated by the machine in the same knitting process. The loops of the insert at the heel travel a very short distance to connect to the side of the upper. FIG. 3D is a stitch loop diagram of the heel area of an exemplary seamless article of footwear produced on a four-needle-bed knitting machine with double bed fabric in accordance with an embodiment of the present disclosure. The facets of the supportive panel are seamlessly inserted or joined. The heel angle can be a steep, right, and or an obtuse angle.

FIG. 3E shows the grain lines of the heel and body half-Milano double- bed fabrics 19 of the exemplary seamless article of footwear shown in FIG. 3D. In FIG. 3E, the footwear upper's fabric grain 15 changes direction by ninety degrees in the knitting process as the heel area is formed, and consequently the stitches appear perpendicular in the heel fabric grain 14. During this process of creating the heal or other attachment, the double bed loops of the opposing side of the heel are transferred to the additional third and fourth needle bed and then attached to face or reverse of the double bed fabric as the shape requires. All movements are performed exclusively by the knitting machine, with no need for human intervention.

Several materials may be included or combined in the same knitting process in various parts of an upper, liner or component, such as: hemp, flax, linen, glass, basalt, carbon fiber ("graphene reinforced polymer") and others, which may be polymer extrusions, prematrixed yam constructions, filaments, copolymers, bi-components, or other strand compositions or combinations that can be fed into the knitting machinery, and which impart additional desired characteristics to a footwear upper, liner, or component. Additional non-FRP materials can be combined and comingled with the fiber reinforcing material, to obtain additional desired functional characteristics, such as silicon rubber, wires, braids, thermo coupling wires, vitreous silica fibers, silicon, ceramics, basalt, para aramids, insulated fiber optics, insulated wire, aramid fibers, chain, silicon rubber, sacrificial materials which dissolve in the forming process, synthetic and other traditional fibers for aesthetic or performance features.

The polymer reinforcing fiber textile fabric can be knitted single bed ("jersey"), double bed fabric, spacer fabric, pointelle, intarsia, net fabric, or other knitted construction or combination of knit constructions. Spacer fabrics, when filled with resin, provide an extremely rigid construction that resembles a corrugation. Cormgated structures may be desired in footwear for extreme environments, such as hockey skates, snow board boots, cycling shoes, and other such applications that require strict rigidity and protection of a foot. Polymer reinforcing fibers may be used throughout the upper construction or in a portion of the body of the upper, and optionally may extend to other portions and/or components. Different materials may be used in adjacent areas of the upper body and/or components. Different materials, such as Kevlar, silicon, wire and other materials previously described, may be used in one or more parts of the upper, liner, and/or upper components, alone, or in addition to the polymer reinforcing fiber.

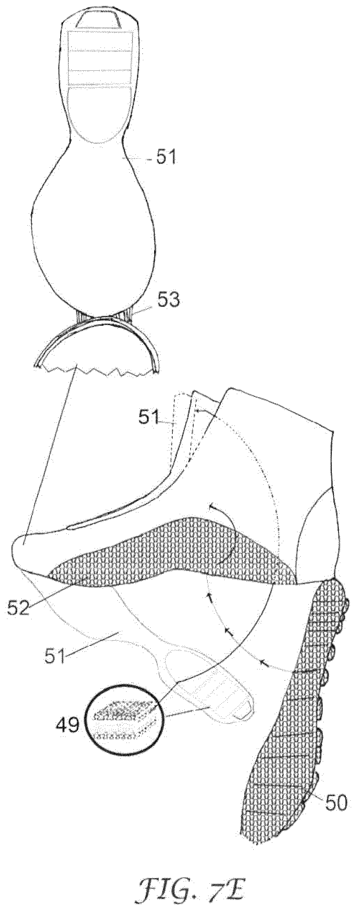

FIG. 7E is a diagram of an exemplary knitted-to-shape three-dimensional footwear upper with one or more knit components, including a tongue component attached at the toe, a sole attached at the heel, and side flange components attached at the sides, in accordance with an embodiment of the present disclosure. The textile fabric comprising the upper may have one or more stitch types, including single bed ("jersey"), double bed fabric, spacer fabric (e.g., 49 in FIG. 7E), intarsia, net fabric, inlay fabric (horizontal, vertical, and/or diagonal), or other weft knit construction, and may include multiple unspooled materials in the unitary construction. The same stitch structure may be used in the entire upper or a plurality of parts or on a portion of the upper. The upper may have parts that have common textile materials, components of common textile materials to create attached appendages, such as a tongue (e.g., 51 in FIG. 7E) with multiple stitch constructions, plus additional portions or components which have polymer reinforcing materials included in attached components, which are then finished in a resin application in an post process and then folded to the upper in the shoe making process.

A plurality stitch structures may be knitted into specific areas as needed for the performance characteristics required of the particular zone. For example, the toe and heel areas may be more densely knitted; the ankle area may incorporate extra flex and minimal structures; the instep may incorporate a net or open structure for ventilation and flexion of the foot; an attached sole plate 50 or outer sole of polymer reinforcing fiber may incorporate three dimensional structure, which is customized to the type of shoe and/or the shape of the wearer's foot arch; the sole or sole plate incorporating intarsia areas where an auxetic material is knitting in intarsia sections of the sole not receiving resin; an attached side panel 52 of polymer reinforcing fiber may incorporate a rigid or knitted roll over prevention structure; an attached heel flap may incorporate an additional support or reinforcing element. Appendages may include aesthetic elements or insulated electronic elements, which can survive the polymerization temperature and process, such as Pelican wire of Florida's 300 °C rated wire or other similarly insulated electronic material and/or device.

Additional materials or structures may be combined or integrated in the knitting process to impart additional desired properties to the fully finished three-dimensionally knitted fiber-reinforced footwear upper, such as flexion/recovery, insulation, and stretch-resistance. These materials may include, but not limited to: reflective glass fiber, aramid material, ceramics, magnetic, ferro coated, thermoplastic, conductive, metals, alloys, composite mono-fibers, composite multi-strand, fiber blends, and other natural and synthetic materials. Structures might include insulative hollow areas, articulated pleated regions, three-dimensional tubes, channels, tunnels, connectors, bridge structures, spacers, jacquard, webs with open areas, inlay (vertical, horizontal, and diagonal), and edge structures that lend themselves to the shoe-making process.

Three-dimensionally knitting an upper to shape advantageously allows integrating specific materials into areas, enabling transition or blend the features of reinforcement, stretch or other specific performance features, such as: reinforcing against abrasion or other forms of wear; providing seamless flex; creating areas of stretch resistance / limitation or other performance features; better securing the upper to the sole; minimizing waste of materials; better managing production materials and supply chain; streamlining mass-production process; reducing costs; allowing for simplified mass-customized production structures, and ease of implementing ondemand manufacturing applications

From the perspective of manufacturing, utilizing multiple materials, which have different properties and performance features, then cutting, seaming them, and constructing those multiple materials into an article of footwear, can be a wasteful, labor intensive, and inefficient practice. For example, the various materials utilized in a conventional upper may be obtained in different widths, lengths, thicknesses, densities, and packaging arrangements. The materials may be from a single supplier or many suppliers all over the world. Accordingly, a manufacturing facility must coordinate, inspect, inventory, and stock specific quantities of ready-made roll good ("yardage") or sheet materials, with each material being a static design or format created by suppliers. In building FRP footwear components, each supplier may have distinct fiber laying and resin processes. The various raw good materials may also require additional machinery to prepare, inspect, or build sub-assembly line techniques to cut or otherwise prepare the material for incorporation into the footwear. In addition, incorporating separate materials into an upper may involve a plurality of distinct manufacturing steps requiring significant labor, space, dry time, and resources for each step.

Additionally, in the shoe manufacturing process, it is generally desirable to minimize the number and types of materials in the article of footwear, particularly athletic footwear. Fewer materials reduce costs and increase efficiency, given that shoe manufacture is a labor-intensive process. Compounding the shoe manufacturing process with the labor-intensive FRP process for one or more parts creates a very costly article of footwear. The typical knitted shoe manufacturing process encompasses the steps of selecting the material strands, knitting roll goods or upper to shape, cutting the upper material components to shape if roll goods, reducing the thickness of the joining edges ("skiving") for leather or synthetic leather, reducing the thickness of the upper pieces ("splitting"), laminating by adhesive or glue the interlining to the upper pieces ("interlining"), forming the eyelets, grommet the eyelets if required by the design, stitching the upper piece(s) together, shaping the upper over a last ("lasting"), sewing the edges of the upper, stitching ("Strobeling") the upper to a liner ("insole lining"), front part molding of the upper on the last, back part molding of the upper on the last, molding or sewing the bottom of the shoes to the upper ("bottoming"), and setting the materials and adhesives in a heat tunnel.

Modem footwear designs, which use FRP materials, principally athletic shoe designs, require numerous complicated manufacturing steps to handle cut and assemble the two dimensional sheets of a fiber-reinforced material, leading to high labor costs, lengthy time frames for sourcing materials, fabric compatibility issues, seaming compatibility issues, potential adhesive incompatibility, significant production waste in the cutting process. Combining separate materials into a cut and assemble type fiber-reinforced upper involves multiple distinct manufacturing stages requiring multiple labor actions and activities. Employing a plurality of materials and seaming techniques, in addition to a plurality of layers, may also make the footwear heavier, less comfortable, less anatomically functional and cost prohibitive to produce.

Embodiments of the present invention provide a process of manufacturing polymer reinforcing fiber footwear upper and/or components, including an entire one-piece upper, in which a single or multi-layered fully-shaped three-dimensional polymer reinforcing fiber structure for a composite footwear upper, liner, and/or component is knitted and finished completely to a predefined shape with multiple performance zones on a V-bed flat knitting machine. The upper may include a fully shaped integrated heel and require no sewing or joining at the heel or any additional seams to close the upper. Utilizing a knitting machine to automatically close or seal the edges, and to incorporate a functional design or pattern lines, or other specific performance features, can create a seamless, fully shaped footwear upper with no sewing, no pressure points and nearly zero waste. Shaping courses in conventional textile knitting as previously described, is achieved in several ways: short rowing, adding or dropping needles, transferring stitches.

In some embodiments a seamless fully-shaped three-dimensional upper is created exclusively by the knitting machine, where the machine holds structured stitches on an alternate needle bed with needles or fashion points (e.g., 27 in FIG. 6C) and relocates them to a new position. As shown in FIG. 3D and FIG. 3E, in creating fully finished three-dimensional knitted fiber-reinforced polymer uppers, loops are formed in one or more needle beds, fashioned, relocated by knitting points or needles in auxiliary needle beds (e.g., 24 in FIG. 6B), and otherwise mechanically manipulated automatically by the pattern program to knit and move loops and operate the mechanical machinery parts in multiple directions, individually and/or simultaneously, to complete an entirely configured and fully formed three-dimensional foot shaped shoe upper, in which the heel area is completed by the machine, resulting in a one piece footwear upper with no manual intervention.

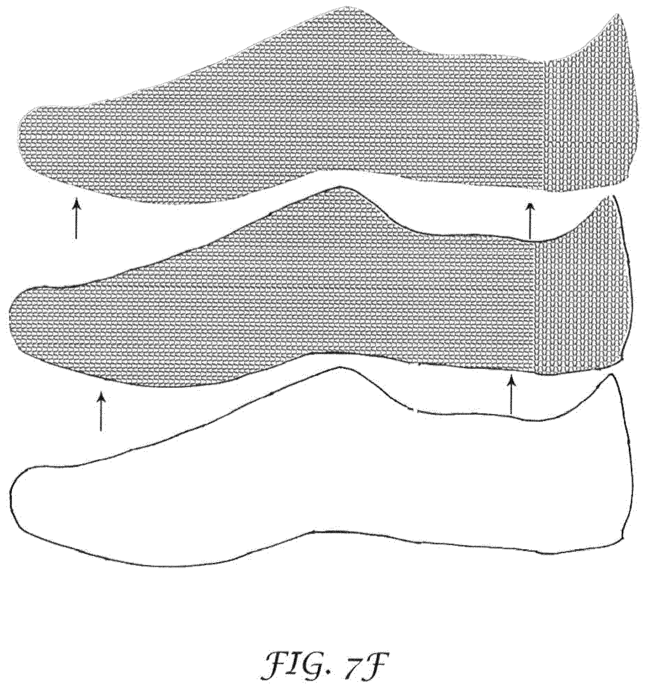

Creating a thin liner of polymer reinforcing fiber in this manner may create a light weight protective shell to line a soccer boot, a work boot, or other articles of footwear. The liner can hold a foot to a sole, while also creating a semi-flexible protective structure around the foot to resist punctures, heat, and other hazards. Several layers or textile uppers may be stacked to complete and upper; each layer may have differing characteristics. FIG. 7F is a diagram of an exemplary knitted- to-shape three-dimensional footwear upper with a second knitted-to-shape three-dimensional footwear upper, which is stacked to create an article of footwear, in accordance with an embodiment of the present disclosure.

As described above, weft or V-bed knitting a fully shaped three-dimensional fiber-reinforced footwear upper with completely finished the edges requires stocking of yam strands only. The fabric is created at the same time as the product is knitted, with only a few strands of waste. The designs, colors, textures, jacquards, performance characteristics, and any combinations of performance or aesthetic options may be changed at will by adjusting, modifying, or creating a new program.

The V-bed three-dimensional knitting process may create multiple structures in the same panel, digitally programming specific structures of differing construction, varying thickness or open spaces, and varying resin where required. Openings, pockets, appendages, ventilation, live-hinge areas, sub-structures, super structures, and liners can also be knitted in the same knitting process. In some embodiments, appendage, liner, or reinforcement structured fabric can be aligned and pressed together into zones to constitute a strategically plied group of layers or zones to create the three-dimensionally shaped footwear upper. In some embodiments, appendage, liner, or reinforcement structured fabric can be separated into separate smaller components by knitting in separating strands connecting successive layers of the three dimensionally shaped footwear upper.

Optionally, the four-needle bed knitting machine can mechanically manipulate a plurality of strands of the fully finished three-dimensionally knitted footwear body during a knitting process to form a predefined, three-dimensional shaped footwear upper, for example, via an intarsia knitting process. In the knitting process, multiple intarsia elements are knitted and joined to form the various components and structures within the footwear upper. These components and structures may be varying polymer reinforcing materials, wires, cables, and common textile strands, which travel in the same component or structure or travel to multiple structures within the footwear upper and appendages.

The three-dimensional shape of the fully-shaped fiber-reinforced polymer footwear upper can include a concave or convex form disposed or located generally in the area of the instep and ankle, while also creating a void for inserting a foot, and a heel. The three-dimensional shape also can encompass substantially planar and/or convex regions of the footwear upper sides and front, for example in the toe box top and mid-foot lateral and medial sides, a boot shaft, all of which optionally may include knitted intarsia elements, of one or more types of component materials. The machine itself can be configured to integrate a plurality of first strands with a plurality of second strands, and any number of additional strands, or combinations of strands, so as to form a predefined, three-dimensional shape, combination of shapes, textures, and structures, which all are part of or contribute to the shape of the fully- formed footwear upper. The machine also can mechanically manipulate other strands, or optionally the same strand, but different portions thereof, of the unitary textile construction with a knitting machine during the knitting process to form the above mentioned predefined generally curved, complex, and planar shapes in the complete footwear upper and/or predefined three- dimensional convex shapes, edges, structures, cushioning, eyelets, rigid areas, stretch zones and other knitted structures in the fully-formed three-dimensional footwear upper. The latter shapes can correspond generally with the heel, toe, instep, ankle and/or the respective edges or other portions of the footwear upper.

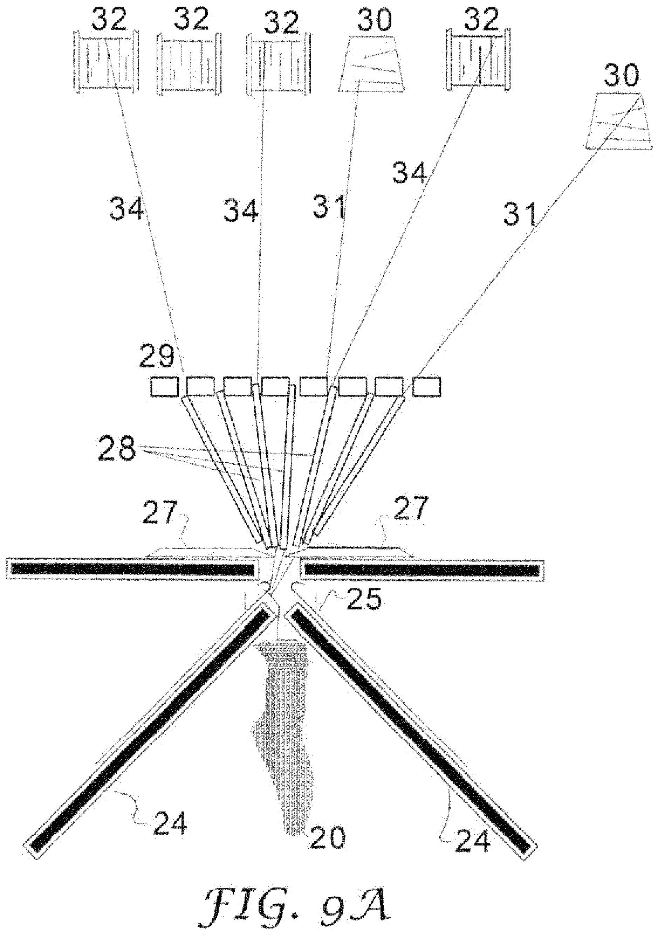

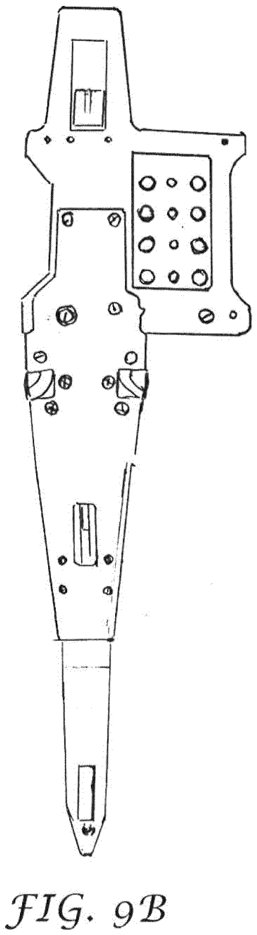

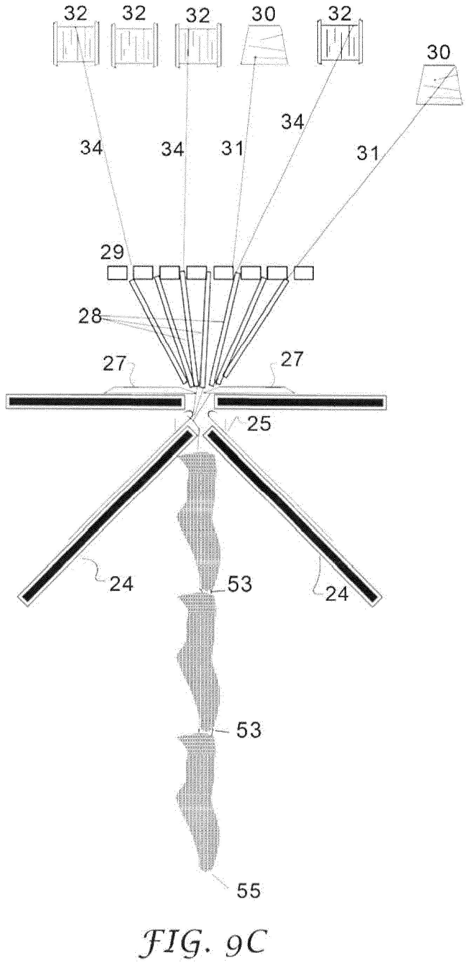

FIG. 9A is a diagram of a seamless weft knitted article of footwear with an integrated heel joined in the same knitting process, plus: heel component attached at the heel, entirely by a weft knitting machine, and emerging from the knitting machine in a unitary construction showing a side view. FIG. 9B is a diagram example of a standard OEM yarn feeder from a Stoll CMS ADF weft knitting machine. FIG. 9C is a side view diagram of a sequential series of essentially the same seamless uppers emerging from the knitting machine.

During the knitting process, the knitting machine knits a fully formed unitary footwear upper to form the respective components of the three dimensional fully finished footwear upper with completely finished edges, entirely by a weft knitting machine. The heel component can be attached at the heel and the upper 20 emerges from the knitting machine in a unitary construction.

For example, according to the invention, the knitting machine knits the toe area, the instep, ankle curve edges, and heel, then moves the stitches for the heel to an alternative needle bed and attaches the heel stitches to the other side of the heel edge, which have respective predefined shapes and patterns. The knitting machine may also knit the eyelet. In this process, the heel stitches may be formed horizontally and attached by the machine to appear perpendicular to the body fabric, in order for the machine to close or seal the edges with knitting loops, to have no seam. The heel area may incorporate a functional design, combination of strands, or pattern lines, for reinforcement, stress and strain management.

As mentioned above, the knitting machine can be any type of sophisticated knitting machine with two or more needle beds, capable of high-speed intricate weft knitting techniques and operations. Optionally, as shown in FIG. 9B, a knitting V-bed machine with vertical yarn insertion and independent standard yam feeders, capable of intricate weft, warp, inlay, Ikat, plaiting, intarsia, and other specialized knitting techniques may be used.

According to embodiments of the present disclosure, the knitted construction may be single layer or multiple layers, completely fashioned to shape by the machinery, with no cutting, no sewing, and no trimming of the upper or upper layers. For example, the configuration of an upper, liner and/or component, or portion of any structure may be knitted as a spacer: a fabric which has a single faced fabric made on one bed and a reverse single faced fabric made on the opposing V-bed, with both single fabrics being connected by an internal strand/or combination of strands configured in V or X patterns of interlacing between the two faces, connecting the two face fabrics by tucking or knitting selected needles on each bed. The frequency and configuration of the V, X, W or other pattern of interlacing between the two face fabrics correlate with the increase or decrease the space between the face fabrics, otherwise known as cushioning, as shown in FIG. 7E.

In some embodiments, in regard to the method for knitting the fully shaped three-dimensional polymer reinforcing fibers shoe upper, the knitted construction may have a single layer or multiple layers of fully-shaped appendage reinforcement structures and / or liner areas, which are completely fashioned to shape by the machinery, with no cutting and no sewing of the upper or upper layers. In some embodiments, the configuration of the upper may be knitted with an attached but separately shaped toe aesthetic or reinforcement shaped appendage with a performance or aesthetic strand, aramid or para-aramid strand and/or a strand combined with a thermoplastic adhesive strand, where the appendage shape is connected to the toe region of the upper and is folded over or under the fully shaped three-dimensional polymer reinforcing fiber footwear upper body and assembled in an post-process related to the shoe making process.

In some embodiments, the configuration may be knitted as an attached but separately shaped eyelet appendage(s), which may have an aesthetic and/or reinforcement shape with a performance or aesthetic strand, meta-aramid or para-aramid strand and/or a strand combined with a thermoplastic adhesive strand, where the heat resistant, functional, or aesthetic shape is connected to the eyelet region of the upper and is folded over or under the fully shaped three-dimensional footwear upper body before or after the molding process and assembled in an post-process related to the shoe making process.

In some embodiments, the configuration may be knitted as an attached but separately shaped heel appendage structure, which may have an aesthetic or reinforcement shape with a performance or aesthetic strand, meta-aramid or para-aramid strand and/or a strand combined with a thermoplastic adhesive strand, where the heat resistant, functional, or aesthetic shape is connected to the heel region of the upper and is folded over or under the fully shaped three-dimensional footwear upper body before or after the molding process and assembled in an post-process related to the shoe making process.

In some embodiments, the configuration may be knitted as an attached but separately shaped ankle appendage, which may have an aesthetic or reinforcement shape with a secondary performance or aesthetic strand, an aramid, for example UHMWPE, meta-aramid,or para-aramid strand and/or a strand combined with a thermoplastic adhesive strand, where the heat resistant, functional, or aesthetic shape is connected to the ankle region of the upper and knitted as a padded liner, which is folded over or under the fully shaped three-dimensional polymer reinforcing fiber footwear upper body before or after the molding process, dependent on function as a reinforcement to the mold, aesthetic embellishment, or liner and assembled in an post-process related to the shoe making process.

In some embodiments, the configuration may be knitted as an attached but separately shaped lateral and/or medial mid- foot region, which may have an aesthetic or reinforcement shape with a performance or aesthetic strand, an aramid, for example UHMWPE, meta-aramid, or para-aramid strand and/or a strand combined with a thermoplastic adhesive strand, where the heat resistant, functional, or aesthetic shape is connected to the lateral and/ or medial mid-foot region of the upper and is folded over or under the fully shaped three-dimensional footwear upper body before or after the molding process, dependent on function as a reinforcement to the mold, aesthetic embellishment, or liner, and assembled in an post-process related to the shoe making process.

In some embodiments, the configuration may be knitted as an attached but separately shaped sole/ insole which may be knitted-to-shape with a performance, cushioning, or aesthetic strand, an aramid, for example UHMWPE, meta-aramid, or para-aramid strand and/or a strand combined with a thermoplastic adhesive strand, where the sole/insole heat resistant, functional, or aesthetic shape is connected to a point on the bottom portion of the main upper, which could be a toe, heel or side bottom region of the upper and this sole/ insole shape is folded over or under the fully shaped three-dimensional footwear upper body before or after the molding process, dependent on function as a reinforcement to the mold, aesthetic embellishment, or liner, and assembled in an post-process related to the shoe making process.

In some embodiments, the configuration may be knitted as an attached but separately shaped full upper liner, which may have an aesthetic or reinforcement shape with a performance or aesthetic strand, an aramid, for example UHMWPE, meta-aramid, or paraaramid strand and/or a strand combined with a thermoplastic adhesive strand, where the heat resistant, functional, or aesthetic shape is connected to the bottom sewing edge region of the upper and is folded over or under the fully shaped three-dimensional footwear upper body before or after the molding process, dependent on function as a reinforcement to the mold, aesthetic embellishment, or liner, and assembled in an post-process related to the shoe making process.

In some embodiments, the configuration may be knitted as an attached but separately shaped strap, tab, closure system, webbing or other shaped appendage, which may have an aesthetic or reinforcement shape with a performance or aesthetic strand, an aramid, for example UHMWPE, meta-aramid, or para-aramid strand and/or a strand combined with a thermoplastic adhesive strand, where the heat resistant, functional, or aesthetic shape is connected to a point on the upper and is folded over or under the fully shaped three-dimensional footwear upper body before or after the molding process, dependent on function as a reinforcement to the mold, aesthetic embellishment, or liner, and assembled in an post-process related to the shoe making process.

In some embodiments, the knitted upper construction may be a single unit, knit one at a time, or a strip of upper units that are `daisy chained together' sequentially. A strip of units emerging from the knitting machine may be connected toe end to heel, lateral side to medial side, medial side to lateral side, or any point or combination of points on the upper to another adjacent or opposing point.

Different knitted components of the knitted footwear upper produced in a knitting process are contiguous and continuous with one another, being formed from the plurality of strands that make up the unitary textile material. Indeed, many of the individual strands can span the length of the footwear upper from the toe to the heel and can be inter-looped in specific regions of the footwear upper, thereby forming and becoming integrated with the different knit patterns of the footwear upper. Thus, as one example, a knitting machine can inter-loop a first strand with a second strand near the toe. The first strand can continue into a vertical element through the eyelet and ankle area. In the ankle area, that strand can be inter-looped or combined with additional strands within the knit pattern to form cushioning. The cushioning being formed for example as a single faced terry looped fabric, to be folded over and attached in the shoe making process, or as a tube with terry loops knitted internally. The same strand can extend into and be inter-looped with yet other strands to provide reinforcement in the knit pattern in the heel. The same strand can extend along the entire footwear upper with minimal waste. This method of manufacturing advantageously reduces the wastage of the elemental yam materials by utilizing the same yams throughout the knitting process. The knitting process creates completely finished edges of the shoe upper, requiring no cutting, sewing, or trimming of the upper, and having nearly zero waste.

As mentioned above, during the knitting process, a unitary construction of the fully shaped three-dimensional polymer reinforcing fiber footwear upper is knitted and forms the body of the entire footwear upper, mid-foot, lateral and medial sides, heel, ankle areas, respective ankle curves and as well as the different components of the footwear upper with their respective structures and patterns. The knitting process is performed in an automatically controlled manner, without direct manual, human manipulation of any strands in the upper construction.

The material fabric (particularly, the strands) used in the unitary construction of the fully shaped three-dimensional polymer reinforcing fiber footwear upper can be mechanically manipulated to provide different knit patterns. During the knitting process, the knitting machine effectively knits a plurality of strands individually and/or collectively to form the different regions of the fully shaped three-dimensional footwear upper in a unitary construction, for example, the first knit region of the toe, the second knit region the instep, the eyelets, the curved edges of the ankle, the heel and/or heel attachment area, as well as manipulate the end stitches of the heel to attach to the corresponding opposite side. In some embodiments, a majority of the mid-foot and toe regions can be weft knitted, and can include multiple structural elements, such as vertical tubular, horizontal inlay, vertical inlay elements, and eyelets as described above. The knitting machine creates all of these different components and patterns in an automated process using multiple needles through which the yam, filament, inlay, extrusion or other element is dispensed and included in the fully shaped three-dimensional footwear upper. Effectively, the plurality of strands are put in place via mechanical manipulation of the respective needles of the knitting machine, within the three-dimensional footwear upper. None of the strands requires direct manual human manipulation to form the upper body, let alone any of its three-dimensional shapes or components.

As shown in FIG. 6C, the knitting machine can be configured to receive multiple different strands, which are spooled on respective cones 11 or other material packaging 1. The different cones, also referred to as spools herein, and different strands can be constructed from different materials as further explained below, depending on the particular attributes and mechanical and/or physical properties of the three-dimensional footwear upper in certain regions. The respective cones each can be mounted in such a way so that the knitting machine can draw in stands of the material from the respective cones.

In some embodiments, the knitting machine can include a plurality of needles. These needles can be manipulated and controlled by actuating mechanisms further controlled by a controller. The controller can have preprogrammed knitting patterns in memory. A user can select and/or program the controller so that it directs the actuating mechanisms and thus the respective independent needles to knit the strands in a particular pattern and/or within a particular region.

Throughout the knitting process, the knitting machine knits different regions and different patterns. As mentioned above, it can knit a first pattern, a second pattern, and successive patterns, forming the shaped structure therein, as well as the eyelets, as well as the ankle pattern, heel and all regions to cover a foot. In constructing the different patterns, the knitting machine can change the density (defined as the number of strands, courses ("rows") and/or wales ("stitches") in a given region as well as in different regions) of the three- dimensional footwear upper. For example, the knitting machine can manipulate the strands so that the density of strands in the perimeter edge is less than the density in the mid-foot region and other regions to accommodate easier sewing. The density of strands in the heel area can likewise be greater than the density in the mid-foot and other regions, to accommodate stiffness for keeping the foot from rolling off the sole. The eyelet area can have a strand density that is greater than the mid-foot region, but perhaps similar to the density in the heel elements to help with lace wear and abrasion. This can provide desired mechanical and/or physical properties of the three- dimensional footwear upper in those specific regions, and/or across the three-dimensional footwear upper. For example, where it is more densely knitted, the three-dimensional footwear upper can be more robust and rigid, limiting stretch. Where it is less dense, the three-dimensional footwear upper can be suppler, exhibiting stretch and recovery. In some embodiments, these characteristics of suppleness and rigidity can be altered in the three-dimensional footwear upper to accommodate instances when the three-dimensional footwear upper is connected to a sole. In some cases, the three-dimensional footwear upper can be stretched more in certain regions than in others, which can either increase or decrease the rigidity and/or suppleness of the three- dimensional footwear upper in the different regions and within the different knit patterns.

A three-dimensional polymer reinforcing fiber footwear upper can include different components and regions that are constructed from strands of different materials having different properties. To create such a three-dimensional footwear upper, the knitting machine can be configured that the different spools include appropriate amounts of continuous strands of a first material and a different second material, and perhaps many materials. In some cases, the first material can be less elastic and more abrasion resistant and durable than the second material. One may be cut resistant or thermoplastic or embody other performance characteristics. Of course, the different materials can be constructed so that they have other different mechanical, thermal, smart ('e-textile"), elastic, and/or properties. As an example, a strand of a first material, for example an ultra-high-molecular-polyethylene ("UHMWPE") can be placed on the first spool. Strands of a second material, for example thermoplastic polymer can be placed on spools.

The knitting machine can pull strands from the first cone or spool and construct the toe area, the mid-foot area and/or the ankle area of the and/or with this plurality of strands. The knitting machine can separately pull the strands of the second material off the cones or spools, respectively, and interloop certain ones of those strands with the first strand. Thus, the strands in certain regions can be of one material or a combination of strands, which can be interloped and connected directly with strands of the second material or combination of strands in predefined locations.

In some embodiments, a machine (such as the Stoll CMS MTB knitting machine, or any automated footwear upper assembly machine described herein) can be configured to mechanically manipulate a strand drawn or pulled from a particular spool to form a predefined three-dimensional shape in a first unitary fully shaped three-dimensional footwear upper. This first strand can be constructed from the second material, for example a thermoplastic polymer. The machine also can make a second fully shaped three-dimensional footwear upper body joined with the first fully shaped three-dimensional footwear upper body, where both the first and second fully shaped three-dimensional footwear upper bodies are constructed primarily from the strand of the second material. If desired, the machine can be coupled to spools of other types of strands such as those constructed from the first material, for example an elongated aromatic polyamide strand. The automated machine also can inter-loop or otherwise join one or more strands of the first material with one or more strand of the second material.

Any strands can be used to form the knitted patterns of the toe, as well as the knitted pattern of the heel, including the mid-foot and the ankle area. The strands of the first material, however, as mentioned above, can be used to manufacture the respective edges around the foot bottom of those components. Where the edges, constructed from the plurality of strands of the first material interface or transition to the other components such as the second knitted pattern for sewing ease, third pattern for ankle cushioning, or heel pattern for reinforcement, the strands of the first material can be interloped and interlaced directly with the knitted strands of the adjacent region of the second material. To achieve this, different needles of the machine can feed and interloop the different materials in the respective different locations and one of two needle beds and transfer cams may move stitches from one area to another; one of two additional and alternative needle beds may attach loops from one location of fabric structure to another. After a fully shaped three-dimensional footwear upper is knitted and completed by the knitting machine, it can be removed from the knitting machine and later joined with a liner and a sole configuration in a desired manner as described herein.

In some embodiments, the knitting machine, can be programmed or otherwise controlled to generate individual self-contained fully shaped three-dimensional footwear upper, or a daisy-chained strip of fully shaped three-dimensional footwear uppers including first, second, third and more complete fully shaped three-dimensional footwear uppers, each knitted in a manner similar to that described above.

As an example, the machine can knit a first fully shaped three-dimensional footwear upper, second fully shaped three-dimensional footwear upper, and third fully shaped three-dimensional footwear upper, or any other number of fully shaped three-dimensional footwear upper. In some embodiments, each three-dimensional footwear upper knit pattern may be different from the patterns of the respective subsequent three-dimensional footwear uppers. Of course, the patterns can be changed to be similar to those of the respective initial three-dimensional footwear upper if desired within the edge interface as well.

In some embodiments, the knitting machine, or other automated footwear assembly machine, can be controlled by the controller to produce the daisy-chained strip of fully shaped three-dimensional footwear uppers. The controller can be any conventional processor, computer or other computing device. The controller can be electrically coupled to the machine, and can be in communication with a memory, a data storage module, a network, a server, or other construct that can store and/or transfer data. That program can be any particular type of data related to footwear uppers. For example, the program can include a first fully shaped three- dimensional footwear upper profile pertaining to one or more particular knitting patterns or other patterns associated with and/or incorporated into the fully shaped three-dimensional footwear upper. The profile of the fully shaped three-dimensional footwear upper can be implemented, accessed and/or utilized by the machine, in the form of a code, program and/or other directive. The profile can be executed to generate the fully shaped three-dimensional polymer reinforcing fiber footwear upper with various features such as: the predefined three-dimensional shape; the position, dimension and/or depth of a heel; the position of an apex and curve of the ankle; the length and location of an instep with eyelets; the position and dimension of various edges and calibration marks for sewing to the liner; the position and dimension of a toe box, also referred to as a front toe gather; the position and dimension the cushioning areas and/or lip edge of the ankle; the side to side lateral stiffness of the heel; the minimum width of the fully shaped three-dimensional footwear upper; the side to side curvature of the mid-foot, toe, medial arch, lateral side, and the like.

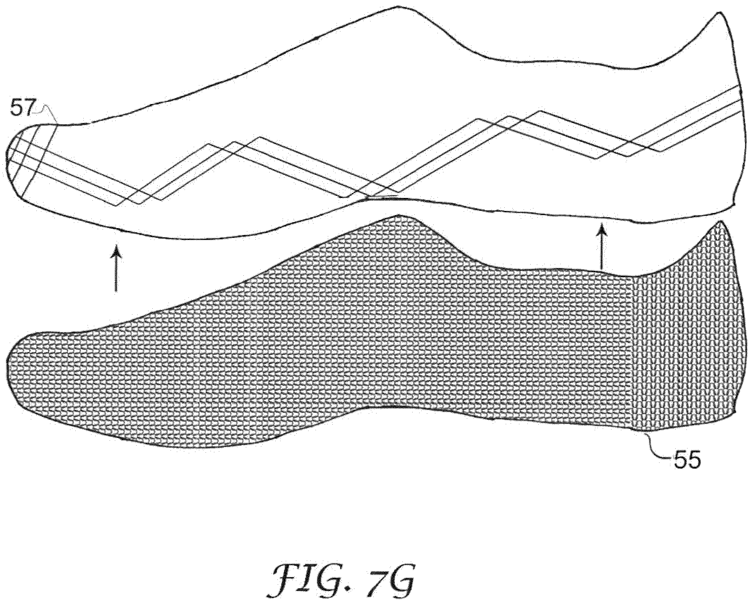

FIG. 7F is a diagram of a knitted-to-shape three-dimensional footwear upper with a second knitted-to-shape three-dimensional footwear upper that is a polymer reinforcing structure, which is stacked upon a third knitted-to-shape three-dimensional footwear upper liner to create an article of footwear. FIG. 7G is a diagram of an exemplary knitted-to-shape three-dimensional footwear upper, having an auxetic weft knitted warp integrated technique; a second knitted-to-shape three-dimensional footwear upper that is a light weight, dynamically flexible polymer reinforcing structure, which is stacked to create an article of footwear resistant to puncture, for example as a soccer boot, in accordance with an embodiment of the present disclosure. The controller and/or the automated footwear knitting/assembly machine can access the fully shaped three-dimensional footwear upper shoe design profiles to thereby control the knitting/assembly machine and produce a strip of fully shaped three-dimensional footwear upper components sequentially (e.g., 55 in FIG. 7F), in a desired number and configuration needed to create the user's desired footwear design. Each of the fully shaped three-dimensional footwear upper component can include a substantially identical predefined three-dimensional shape and preferred size, and can have virtually identical physical features, such as those enumerated above in connection with the fully shaped three-dimensional footwear upper data. Alternatively, where the machine is configured to produce only a single fully shaped three-dimensional footwear upper component to create the desired shoe design, the machine can be controlled by the controller, which can utilize the first fully shaped three-dimensional footwear upper design profile to produce a fully shaped three-dimensional footwear upper having features that correspond to the design profile.

In turn, a user can configure different fully shaped three-dimensional footwear uppers with various reinforcing element profiles, including sizes, configurations, and/or modular styles, and select the one that best suits their preferences. In addition, if a user has a particular profile preference, that profile can be stored in a database. When the user wears out their first fully shaped three-dimensional footwear upper liner, or component, the user can request an identical footwear upper, liner or component to be produced. Thus, the user can start again with virtually the same fully shaped three-dimensional footwear upper, liner or component and associated feel as they had with the previous fully shaped three-dimensional footwear upper. This can enhance the comfort of the user. Also, the user need not go through extensive selection process and time period to locate a fully shaped three-dimensional footwear upper that performs as desired. Instead, upon purchase of the new fully shaped three-dimensional footwear upper combination, the fully shaped three-dimensional footwear upper will consistently perform as expected. Due to the durability and life span of composite materials, a user may wear out a noncomposite upper cover layer or a sole and may only need to replace that portion of the article of footwear which is worn. Knitting uppers liners, and components individually lends itself to modular footwear designs, where shoe parts such as soles, toe caps, uppers and inserts may be interchanged and replaced for aesthetic or functional efficiency and practicality.

When producing an individual units or connected strip of: footwear uppers with polymer reinforcing liners, uppers with one or more polymer reinforcing appendages, multilayered uppers, or fully-shaped polymer reinforcing uppers, each unit in strip can be separated from one another in a variety of manners. A waste section can be knitted at the start of each individual unit or connected strip of units, at the end and in between each individual unit and successive unit.

According to embodiments of the present disclosure, the method of manufacturing knitted fully shaped three-dimensional footwear uppers with one or more polymer reinforcing elements, the start and the bottom edge interface of the toe element can be only a strand, or a couple strands waste and a decoupling sacrificial strand, which protects the finished bottom edge ("toe"). In manufacturing an individual fully shaped three dimensional upper, the heel area has no edge interface and therefore no waste section.

In manufacturing a daisy-chained strip of fully shaped three dimensional uppers with one or more polymer reinforcing elements, the heel area has an edge interface strand protecting the finished edge and that interface strand links up to bottom edge ("toe") interface strands of the next fully shaped three-dimensional footwear upper, separated by a decoupling (or sacrificial) strand. This transition area can mimic or follow the curvature of the bottom edge ("toe") of a particular fully shaped three dimensional upper as desired. Therefore, there is no waste section except a few strands waste per unit, which is less than 1% of the total weight of the fully shaped three-dimensional footwear upper.

In one example, the respective edges, for example heel to toe, can be joined with the edge interface strands in the form of a single pull stitch or strand. This pull stitch can be pulled by a machine or a human operator so that the respective edges separate from one another and/or the edge interface, thereby allowing one fully shaped three-dimensional footwear upper to be removed from or dissociated from another fully shaped three-dimensional footwear upper. Likewise, the edge can include one or more pull strands that can be pulled via a machine or human operator to separate the lower edge from the edge interface.

In some cases, where the lower edge ("toe") of one fully shaped three- dimensional footwear upper is joined directly with the upper edge ("heel") of another fully shaped three-dimensional footwear upper, a pull strand at the edge interface can be pulled to separate the second fully shaped three-dimensional footwear upper from the first fully shaped three-dimensional footwear upper.

Another manner of separating the fully shaped three-dimensional footwear uppers from the daisy-chained strip can include the use of a decoupling element. This decoupling element can decouple one fully shaped three-dimensional polymer reinforcing fiber footwear upper from the next, e.g., at the edge interface or respective edges of the fully shaped three- dimensional footwear uppers. A decoupling device can be used to decouple, which may include shears, pressurized steam or other separating device or mechanism, which cuts, pulls, or melts the thermoplastic separation strands across the lower edge ("toe") of each fully shaped three- dimensional footwear upper. In so doing, those shears cut, the pressurized steam melts or evaporates off, the next adjacent and/or successive fully shaped three-dimensional footwear upper. The decoupling element can make multiple cuts, multiple pulls, or steaming traverses, one adjacent the upper edge ("heel") of each successive fully shaped three-dimensional footwear upper and/or adj acent the lower edge ("toe") of the each successive fully shaped three- dimensional footwear upper. In cases where the edge interface element is only a strand/or a couple strands wide, the decoupler can cut or steam melt across this edge interface, thereby separating the respective edges of the third and second fully shaped three-dimensional footwear uppers. From there, the fully shaped three-dimensional footwear uppers can be dropped into a bin or other container for further processing on an individual basis. In some embodiments, a continuous strip of multiple fully shaped three-dimensional footwear uppers with one or more polymer reinforcing elements can be rolled on a spool and delivered to a manufacturer who can then mechanically or manually disassociate the individual fully shaped three-dimensional footwear uppers from the daisy-chained strip.

Upon decoupling of the individual fully shaped three-dimensional footwear, each separated upper generally retain their predefined three-dimensional shapes. For example, even upon decoupling, the individual uppers will retain the concavity of the concave shape and/or contour of the toe, mid-foot, instep, ankle and heel and the heel angle. Retaining its shape also assures that the fully shaped three-dimensional footwear upper fits consistently into other post-processing tools, molds, and sewing equipment that is required for manufacturing the finished article of footwear ("shoe") repeatedly and consistently.

Making the fully shaped three-dimensional polymer reinforcing fiber footwear uppers in a daisy-chained strip form can also generate a fully shaped three-dimensional footwear upper daisy-chained strip having varying widths. For example, the knitting machine can vary the widths of the uppers in a daisy-chained strip by size and/or individual fully shaped three- dimensional footwear uppers of the strip. For example, the machine can mechanically manipulate strands to generate fully shaped three-dimensional footwear uppers along the strip that have a width at their outermost lateral boundaries of a large size shoe, perhaps a men's size twenty-two. The largest size is generally the maximum width of the fully shaped three-dimensional footwear polymer reinforcing fiber uppers strip, and along its length there is no limit. This maximum width can correspond to the region of the fully shaped three-dimensional footwear uppers as measured across the instep at the widest part of the toe flexion. It also can be the maximum of width of any individual fully shaped three-dimensional polymer reinforcing fiber footwear upper or attached span of the widest appendages that is formed along the daisy-chained strip.

The machine also can mechanically manipulate the strands and the overall width of the daisy chained strip so that the fully shaped three-dimensional footwear uppers in the strip includes a second width, which is less than the first width. The second width can correspond generally to the region of the fully shaped three-dimensional footwear uppers near the heel, heel tab and/or any other rearward appendage. By precisely knitting the daisy-chained strip in the respective fully shaped three-dimensional footwear uppers therein, minimal waste is generated from the process. This is true even when the individual fully shaped three-dimensional footwear uppers and the daisy-chained strip width varies. The knitting machine may also knit different sizes of a fully shaped three-dimensional footwear upper, and any layers required of the design, with each component as a unit, without the edge interface strand. The waste material that is usually knitted between the maximum width and the smaller width of different units in a strip with off the shelf machine builder software and CAD in addition to an interface strand would otherwise be removed and discarded as waste. Further, to remove this material would typically require additional machinery and/or human intervention or manipulation.

Textile materials for forming typical shoe uppers may be selected based upon the properties of wear-resistance, flexibility, stretch, and air-permeability, for example. The upper may be formed by a conventional method of cutting and sewing, therefore cut from numerous material elements, which each may impart different properties to specific portions of the upper. This cutting and sewing method creates considerable waste.

Two-dimensionally shaped knitted textiles and/or three dimensionally knitted textiles, which are semi-finished textiles used in footwear uppers are generally seamed at the heel, the medial arch or other parts of the foot, generally provide lightweight, air-permeable structures that are flexible and comfortably receive the foot, and have heightened movement and flexibility. Use of roll good fabrics, die cut, hand cut, two-dimensionally shaped knitted textiles and/or three dimensionally knitted textiles which are semi-finished in footwear uppers typically require seams. Seams introduce difficulties and limitations, to include difficulties in manufacture and freedom of design, and unintended abrasion to the user causing, for example, blisters and thereby compromising athletic performance. In the case of fiber-reinforced polymer matrices, joining these cut pieces created special handling issues for sewers, and handlers. The seam types an join types are limited to specific techniques.

According to embodiments of the present disclosure, a polymer reinforcing structure in the shape of a footwear upper, liner, or component can be formed entirely in one piece has no seam weakness or failure points and causes no seam irritation or pressure points.

To impart other properties to the fully finished three-dimensionally knitted footwear structure with a polymer reinforcing element, including durability, flex/recovery, comfort, and stretch-resistance, additional materials can be typically combined or integrated in the knitting process, including but not limited to reflective, cut resistant, flame-retardancy, shock resistant, thermoplastic, insulative, adhesive, reinforcing, ventilating, cushioning, reflective, aesthetic, for example. Three-dimensionally knitting an upper to shape allows integrating specific materials into areas, the ability to transition or blend the reinforcement, stretch or other specific performance features, into regions to: reinforce against abrasion or other forms of wear; provide seamless flex; create areas of stretch resistance/limitation or other performance features; better secure the upper to the sole; minimize waste of materials. Combining features of a polymer reinforcing structure layer or element and a three-dimensionally knitted performance layer in an article of footwear, creates a multi-functional shoe structure.

During the knitting process, as shown in FIG. 6C, a series of strands 34 may be fed into the machine by automatically pulling a plurality of strands 31 or other materials off a plurality of spools/ packages 30 with the movement of the knitting machine feeders 28. Specialized materials such as fiber-reinforced polymer strands, auxetic strands, stainless steel, silicon, chain, metals, heated hose, catheter heater wire, sensing wire, cable, braid, extrusion, and other materials that must be packaged on a spool, and 'unwound' off that package not to cause torque 32 are fed into the machine by any automatic unspooling device 38. An upper, liner, and/or several layers may be combined to create a complete article of footwear.

In some embodiments, as shown in FIG. 7G, a layer utilizes a weft knitting warp integration, where strands of specialized material are inserted by the machine, e.g., in a vertical, diagonal, horizontal direction or any combination of directions. The layer may be aesthetic, covering all or a portion of a polymer reinforcing fiber layer, or it may be utilized as an underlayer, or the weft knitting warp may add additional materials with desired characteristics to a layer. The weft knitting warp insertion process may interloop strands in one or more directions, and in one or more knitting techniques as it travels through the fabric structure, for examples: knit, tuck, inlay, float (pass), plait. Additional ligamental-like stretch or reinforcing fibers such as silicon rubber extrusion or an auxetic strand may be configured aesthetically, or anatomically in intarsia zones of the upper, liner, and/or a component, for example to assist in flexing in the toe area while providing ankle roll over prevention, by adding extra stiffness to one or more areas of the upper's sides, as shown in FIG. 7E. One or more additional silicon rubber, auxetic, or aramid reinforcing strands may be applied to specific areas of an upper, liner, and/or component to vary the amount of stiffness, flexion, or resilience desired. The positions of the extra strands may also be configured proportionally by size and intended use to map the foot action of the anticipated use such as side to side lateral movements, repeated flexion, quick pivots, starts, and stops. These materials may knit or float, horizontally, diagonally, vertically or in any combination of directions, with all strands continuing in the same direction of each feeder tip.

The feeders in the knitting machine may do this is several ways: 1) intarsia of extra material, 2) adding plaiting of extra material to a specific zone, 3) inlay of one or more additional material strands horizontally, vertically, diagonally or combinations of directions for each strand. In some embodiments, one or more strands may be guided into the upper in the warp direction. The strands may knit, tuck, inlay or float vertically, horizontally, and/or diagonally as the design or function of the upper requires.

The weft knitting warp strands may act as a reinforcing group, adding additional strength; may be an insulated conductive assembly, ready to be coupled to electronic connectors and components; may be a prementioned heat resistant elasticizing material such as a silicon extrusion, adding a ligamental stretch and recovery effect; or other specific performance materials to add desired characteristics to one or more zones of the three-dimensional fully- shaped footwear upper. An example of this is a soccer boot requiring lateral and slide restrictions on the upper material to maintain the ankle from rolling over and the foot from sliding off the sole.

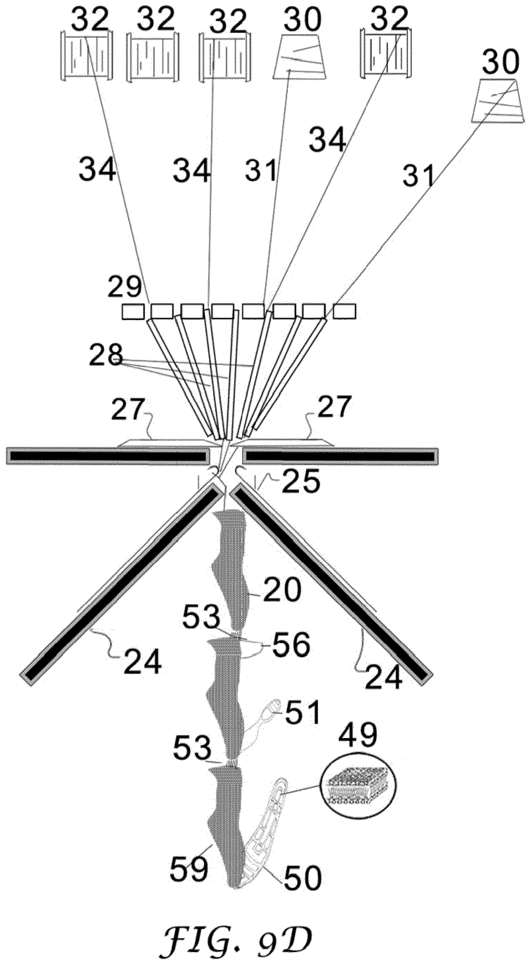

FIG. 9D is a side view diagram of a sequential series of differing seamless uppers emerging from the knitting machine. The machine system may also automatically knit additional substantially identical fully finished three-dimensionally knitted polymer reinforcing fiber footwear uppers, as shown in FIG. 9D. Each upper or set of upper components to create a shoe design is produced individually or in a sequential production manner 59, where each subsequent upper or set of upper components is linked or daisy chained together with one or more strands or a waste hinge 53. The uppers or set of upper components may all have similar configurations of the warped strand reinforcement, containing one or a plurality of strands. The machine memory system may also automatically knit additional substantially customized in size, coloration, configuration, and other attributes, each completing a fully finished three-dimensionally knitted footwear upper design, individually produced by the machine's memory or a sequential production manner, where each subsequent upper or set of upper components is linked or daisy chained together with one or more strands. The uppers or set of upper components may all have similar configurations of the warped strand reinforcement deployed, and each containing one or more strands, dependent on the desired design of each.

This method of manufacturing a three dimensional fully finished footwear upper with one or more fiber-reinforced polymer composite elements, liners, and components, utilizing a V-bed knitting machine can advantageously reduce labor, handling and material costs by shaping a reinforcing fiber in the knitting process and optionally adding any other desired materials in the same knitting process. Knitting the reinforcing fiber into a finished shape, optionally with curves, open portions, textures, compound structures, shaped in the same knitting process minimizes the number of manufacturing steps in composite formation and eliminates joins. Knitting in other desired materials, reduces the post-processes and embeds the materials permanently into the structure without joins. Knitting materials to shape minimizes excess and wasted materials from the cutting, stacking, sewing, and assembly processes. Knitting to shape minimizes the number of manufacturing steps as compared to forming a two-dimensional composite panel. Knitting a footwear upper completely to shape minimizes the number of manufacturing steps in a three-dimensionally knitted composite textile upper or liner which would otherwise require sub-assemblies and seams on various positions on the foot. Knitting polymer reinforcing materials to shape minimizes the material handling equipment and floor space required to receive and process fiber-reinforced polymer panels to one which handles solely the polymer reinforcing fiber components for manufacturing uppers. In this manufacturing process, only packages of raw material are stocked and subsequently processed by the knitting machine. These packaged raw materials may be 'prepreg' or carbon fiber with no resin applied. The knitting machine may create more dense areas and less dens areas. The knitting machine may optionally create knitted zones or intarsia areas of the upper by incorporating other materials in the knitting process.

In some embodiments, the three-dimensional shaped footwear upper, element, liner, and/or components may be knitted from resin impregnated pre-carbonized strands or commingled fiber (carbon and thermoplastic (TP)). A binder strand of flexible resin may also be twisted with the carbon fiber. Comingled and/or binder yams, wrapping the more abrasive polymer reinforcing fibers like carbon fiber can reduce the friction on machine parts and help keep the fibers together, thereby minimizing breakage. Once processed by the knitting machine, the resulting resin impregnated polymer reinforcing fiber uppers, liner and/or upper components have completely finished edges and enter the molding and/or additional polymerization process as a unitary construction.

A knitted pre-impregnated or comingled upper, element, liner or component is typically frozen after knitting to prevent the resin from curing prematurely but is thawed at the lay-up site and hand laid or mechanically laid over the part or mold. Typically, the resulting structure is "laid up," then vacuum compacted under a film and baked in an oven or autoclave at 250 to 350 °F (121 to 177 °C) for a specified amount of time to activate the TP and/or resin. For nonimpregnated fibers (carbon, fiber glass, hemp, UHMWPE, and others), about 50% resin proportion by weight may be added. Some fibers are lighter than resin, which means that the upper may be inclined to float or look drier than it actually is.

A tool such as a roller or a stiff brush can be used to push the resin evenly into the fibers. If there is more than one layer, each layer is `wet-out', and the next layer is applied, then any other layers successively. The fiber soaks up the resin and as the resin migrates through the fibers, a grooved roller or stiff brush is moved across the contoured surface of the fibers and they become more compact as the excess resin and any trapped air bubbles are squeezed out of the upper. Once the viscosity of the resin starts to thicken the fibers will be held down in the upper by the resin. A plastic film may be placed over the upper or into the contours, and excess resin and air bubbles are pushed out to the edges, using a squeegee. The film prevents excess resin and air from being pulled back into the upper. The plastic gives a smooth surface. An optional process is using a vacuum. The film is a perforated film and in between the upper and the film a 'bleeder' material is applied. A vacuum bag is placed on top of the whole assembly and 0.25 to 0.38 metres (10 to 15 inches) of mercury vacuum is applied to the assembly. The bleeder material soaks up excess resin. If the upper is small and it is expected that there might be excessive resin pooling in areas, additional layers of perforated film and bleeder material may be placed in the assembly before the upper most vacuum bag is applied.

In some embodiments, the three dimensionally shaped footwear upper, element or set of upper components may also be knitted from oxidized acrylic strands and then heated to carbonize the strands, and a resin injected in a separate process. In some embodiments, the three- dimensionally knitted carbon fiber fabric shaped footwear upper may be embedded in a carbon template by carbon vapor deposition to form the shaped three dimensionally shaped footwear upper and then heated to carbonize the yam. In some embodiments, a stack of knitted fiber reinforcing upper, liner or component may be embedded in a carbon matrix by carbon vapor deposition to form a footwear upper.

After the fiber-reinforced polymer upper is cured, it may be stitched onto a liner and lasted and bottomed to form the completed shoe. This process eliminates the cutting and greatly reduces the stitching steps, eliminates the interlining steps of the typical shoe manufacturing process, and greatly reduces the assembly time and costs associated with creating new patterns and retooling the manufacturing process for new designs, new styles and different shoe sizes. Rather, a new pattern program must be created for each change in design and a separate graded program must be used for each desired shoe size. Similarly, fewer upper material yams ("strands") must be kept in inventory to accommodate desired changes in style.

In some embodiments, a 'sock-like' three-dimensionally shaped footwear upper can be created via a knitting process, where one or more portions of the knitted upper is created with one or more strands of polymer reinforcing fiber in a knit structure, using an intarsia technique, for example knitting the toe cap, sole plate, and heel in soft material tc, and in the same knitting process attaching an additional sock structure toe to toe, where the corresponding sock has a polymer reinforcing fiber knitted in intarsia at the toe cap, heel, and sole plate, which in the mold process becomes an arch plate, sole, or mid-sole. A heat resistant material such as Kevlar or Nomex may be knitted as the sock bodies surrounding the polymer reinforcing fiber section (for prepreg molding). The polymer reinforcing material may be placed in a mold with a foot shaped insert consisting of perforated film, bleeder material and a hard foam, silicon or other shaped replica insert of a user's foot, and a second non-perforated film. Resin can be applied to the toe cap, sole plate, and heel; vacuum pulls down on the non-perforated film. Hard foam replica insert of a user's foot can be pushed into the resin filled polymer reinforcing fiber and excess resin flows into the bleeder material. The resulting upper is sock like on the top. The second sock's toe, sole, plate and heel have the desired characteristics of a fiber-reinforced composite along with any other characteristics that are imparted by additional materials knitted into the structure along with the polymer reinforcing fiber. A sole plate may also be customized to individual wearer using this process, using a knitted element.

In some embodiments, one or more attached knitted components may be also be formed and attached to the 'sock-like' structure, exclusively in the same knitting process ready for molding or resin application to create an article of footwear. In some embodiments, one or more knitted components may be also be formed exclusively in a knitting process and applied to the upper body, ready for molding or resin application to create an article of footwear.

In an exemplary knitting process, a knitted polymer reinforcing fiber element with specific performance properties can be incorporated into a wide variety of different articles. Examples of articles that could incorporate a knitted polymer reinforcing fiber element include, but are not limited to: footwear, gloves, shirts, pants, socks, scarves, hats, jackets, as well as other articles. The appended claims are directed to footwear. Other examples of articles include but are not limited to: protective equipment such as shin guards, knee pads, elbow pads, shoulder pads, as well as any other type of protective equipment. Additionally, in some embodiments, the article could be another type of article including, but not limited to, bags (e.g., messenger bags, laptop bags, etc.), purses, duffel bags, backpacks, as well as other articles that may or may not be worn.

While various embodiments have been described, the description is intended to be exemplary, rather than limiting and it will be apparent to those of ordinary skill in the art that many more embodiments, configurations, and implementations are possible and are within the scope of the embodiments. Accordingly, the embodiments are not to be restricted except in light of the attached claims. Also, various modifications and changes may be made within the scope of the attached claims. Other systems, methods, features and advantages of the embodiments will be, or will become, apparent to one of ordinary skill in the art upon examination of the following figures and detailed description.

## Claims

1. A footwear article with one or more polymer reinforcing elements comprising:
a seamless upper (17) comprised of a plurality of materials that includes a polymer-reinforcing fiber (31, 34), the seamless upper formed in a unitary knit construction (33, 55, 59) through a knitting process performed by a knitting machine,
wherein the unitary knit construction comprises an upper main body comprising a plurality of portions, at least one portion of the plurality of portions in the unitary knit construction comprises the polymer-reinforcing fiber that is formed by knitting one or more reinforcement knitting yarns during the knitting process;
wherein each of the plurality of portions is knitted into shape through the knitting process and is connected to another portion of the unitary knit construction seamlessly by knitting stitches that are generated in the knitting process;
wherein the plurality of portions of the unitary knit construction comprise: a lateral side portion; a toe portion; a medial side portion; an ankle portion; an instep portion; and a heel portion, wherein further an angle between the heel portion and the instep portion is formed through the knitting process, wherein:
the heel portion is formed by an insert generated in the knitting process;
the insert being manipulated in the knitting process; and
the insert having loops, wherein the insert has been produced by the knitting machine moving stitches for the heel portion to an alternative needle bed and subsequently attaching the loops of the insert to the medial side portion and the lateral side portion to attach the insert to the medial side portion and the lateral side portion.

2. The footwear article of Claim 1, wherein the plurality of portions further comprises one or more appendages in the unitary knit construction that are knitted into shapes through the knitting process and connected to the upper main body seamlessly via knitting stitches that are generated in the knitting process, or via connecting strands that are generated in the knitting process.

3. The footwear article of Claim 2, wherein the one or more appendages in the unitary knit construction comprise one or more of: a sole; an insole; a tongue; a heel support; a side support; another upper layer; an inner layer; a terry loop cushion assembly structure; a liner; and a lattice structure, and the footwear article further comprises one or more knit void spaces thereby creating a cage for the seamless upper.

4. The footwear article of Claim 1, wherein the one or more reinforcement knitting yarns comprise one or more of: a comingled thermoplastic adhesive yarn; a metaaramid; a para-aramid; a comingled non-thermal adhesive yarn; aramid yarn.

5. The footwear article of Claim 2, wherein each of the one or more reinforcement knitting yarns comprises polymer reinforcement fibers operable to support the at least one portion of the plurality of portions in the unitary knit construction, wherein the polymer reinforcement fibers comprise one or more of: carbon fibers; oxidized fibers; glass; vitreous silica; aramid; and para-aramid; auxetic fibers; thermo-shielded electronic cable; high heat resistant ceramics, thermo coupling wires, braids; aramids, glass (S-glass, r-glass), hemp, jute, flax, boron, metals, basalt, metals (aluminum alloys, magnesium alloys, titanium, etc.), shape memory alloys, and ceramics (SiC, glass ceramic, etc.) and para aramids.

6. The footwear article of Claim 5, wherein one or more reinforcement weft knitted warp yarns are knitted, inter-looped, plaited, tucked and/or passed across selected portions of the plurality of portions during the knitting process in one or more directions.

7. The footwear article of Claim 1, wherein the one or more reinforcement knitting yarns are knitted, inter-looped, plaited, tucked and/or passed on both faces of fiber-reinforced polymer composite fabric section during the knitting process.

8. The footwear article of Claim 2, wherein the one or more reinforcement knitting yams comprise resin-impregnated strands.

9. The footwear article of Claim 1, wherein the angle between the heel portion and the medial and lateral portions is formed exclusively through the knitting process, and wherein the angle is greater than 70°.

10. The footwear article of Claim 2, wherein the unitary knit construction is fully shaped in three dimensions through the knitting process by using the knitting machine exclusively, and wherein further the plurality of portions have different configurations defined by the knitting process, at least one of the different configurations comprises a fiber density that is varied in different zones.

11. A method of manufacturing seamless footwear articles, the method comprising:
performing a knitting process by a knitting machine to generate a first unitary textile construction (33, 55, 59) of three dimensions that defines a first upper (17), wherein the first unitary textile construction comprises a plurality of portions that define:
an upper main body comprising a first plurality of portions, wherein each of the first plurality of portions is knitted into shape through the knitting process and is connected to another portion seamlessly by knitting stitches that are generated in the knitting process, and wherein the first plurality of portions comprise: a lateral side portion; a toe portion; a medial side portion; an ankle portion; an instep portion; and a heel portion; and
one or more appendages that are knitted into shapes through the knitting process and connected to the upper main body seamlessly by knitting stitches that are generated in the knitting process;
wherein the performing of the knitting process comprises knitting one or more reinforcement knitting yarns (31, 34) to form a knitted reinforcement portion that corresponds to a portion of the plurality of portions, and wherein each of the one or more reinforcement knitting yams comprises polymer reinforcing fiber (31, 34);
the heel portion is formed by knitting an insert in the knitting process, the insert having loops;
manipulating the insert in the knitting process;
moving stitches for the heel portion to an alternative needle bed of the knitting machine and subsequently attaching the loops of the insert to the medial side portion and the lateral side portion to attach the insert to the medial side portion and the lateral side portion; and
attaching at least one upper structure comprising the first upper with an outsole.

12. The method of Claim 11 further comprising, after the knitting process, performing a polymer composite process to transform the knitted reinforcement portion into a fiber-reinforced polymer composite fabric section comprised in the first upper.

13. The method of Claim 11, wherein the knitting of the one or more reinforcement knitting yarns comprises:
using a yarn feeder on the knitting machine to move the one or more reinforcement knitting yarns in a vertical and side-to-side direction; and
knitting, tucking, plaiting and or inlaying the one or more reinforcement knitting yarns into a vertical warp textile element.

14. The method of Claim 11, wherein the one or more appendages comprise one or more of: a sole; an insole; a tongue; a heel support; a side support; another upper layer; an inner layer; a terry loop cushion assembly structure; a liner; and/or a lattice structure, and the first upper further comprising one or more knit void spaces thereby creating a cage for the seamless upper.

15. The method of Claim 12, wherein the one or more reinforcement knitting yarns comprises using one or more of: a comingled thermoplastic adhesive yarn; a metaaramid; a para-aramid; a comingled non-thermal adhesive yarn; glass (S-glass, r-glass); hemp; jute; flax; boron; metal; basalt; metal alloy; shape memory alloy; and ceramic; thermo-shielded electronic cable; thermo coupling wire; braid; auxetic material; and/or an aramid yarn.

16. The method of Claim 12, wherein each of the one or more reinforcement knitting yarns comprises polymer reinforcement fibers operable to support the fiber-reinforced polymer
composite fabric section, wherein the one or more reinforcement knitting yarns comprise one or more of: carbon fibers; oxidized fibers; glass; vitreous silica; aramid; and para-aramid; high heat resistant ceramics; wire; wire braids; aramids; para aramids; and resin impregnated strands.

17. The method of Claim 12, wherein the knitting process comprises generating a continuous chain of unitary textile constructions, wherein each unitary textile construction corresponds to an upper and interconnects with another through sacrificial or decoupling strands that are generated in the knitting process, wherein the continuous chain of unitary textile construction comprises a first unitary textile construction, and wherein further each unitary textile construction in the continuous chain comprise a knitted reinforcement portion; and
separating the continuous chain of unitary textile constructions from one another by separating each of the sacrificial or decoupling strands.

18. The method of Claim 17, wherein the continuous chain of unitary textile constructions correspond to a plurality of uppers of a same configuration or correspond to uppers of different configurations, the plurality of uppers of the same configuration or the uppers of the different configuration being manufactured using a controller to create a sequential daisy chain of upper structures.

19. The method of Claim 11, wherein the plurality of portions have different configurations defined by the knitting process.

20. The method of Claim 12, wherein the first unitary textile construction comprises: a first appendage; and a live hinge connecting the first appendage to the upper main body, and further comprising, after the knitting process, folding the first appendage into a predefined position in the first upper along the live hinge.

21. The method of Claim 16, wherein the performing of the polymer composite process comprises heating the knitted reinforcement portion to carbonize the one or more reinforcement knitting yams.

22. The method of Claim 11, wherein the knitting machine comprises using an unspooling device operable to unspool at least three or more spools of yams in the knitting process.

23. The method of Claim 11, wherein the performing of the knitting process comprises knitting the plurality of portions by using different stitch patterns.

## Patentansprüche

1. Fußbekleidungsartikel mit einem oder mehreren Polymer-Verstärkungselementen, der Folgendes umfasst:
ein nahtloses Obermaterial (17), das aus mehreren Materialien besteht, das eine Polymer-Verstärkungsfaser (31, 34) enthält, wobei das nahtlose Obermaterial in einer einheitlichen Strickkonstruktion (33, 55, 59) durch ein Strickverfahren, das durch eine Strickmaschine ausgeführt wird, gebildet wird,
wobei die einheitliche Strickkonstruktion einen oberen Hauptkörper umfasst, der mehrere Abschnitte umfasst, wobei wenigstens ein Abschnitt der mehreren Abschnitte in der einheitlichen Strickkonstruktion die Polymer-Verstärkungsfaser umfasst, der durch Verstricken eines oder mehrerer Verstärkungsstrickgarne während des Strickverfahrens gebildet wird;
wobei jeder der mehreren Abschnitte durch das Strickverfahren in Form gestrickt wird und mit einem weiteren Abschnitt der einheitlichen Strickkonstruktion durch Stricken von Nähten, die im Strickverfahren erzeugt werden, nahtlos verbunden wird;
wobei die mehreren Abschnitte der einheitlichen Strickkonstruktion Folgendes umfassen: einen seitlichen Seitenabschnitt; einen Zehenabschnitt; einen mittleren Seitenabschnitt; einen Knöchelabschnitt, einen Einstiegsabschnitt; und einen Fersenabschnitt, wobei ferner ein Winkel zwischen dem Fersenabschnitt und dem Einstiegsabschnitt durch das Strickverfahren gebildet wird, wobei:
der Fersenabschnitt durch einen Einsatz gebildet wird, der im Strickverfahren erzeugt wird;
der Einsatz im Strickverfahren verarbeitet wird; und
der Einsatz Schlaufen hat, wobei der Einsatz durch die Strickmaschine erzeugt worden ist, wobei die Nähte für den Fersenabschnitt zu einem alternativen Nadelbett bewegt werden und daraufhin die Schlaufen des Einsatzes am mittleren Seitenabschnitt und am seitlichen Seitenabschnitt befestigt werden, um dem Einsatz am mittleren Seitenabschnitt und am seitlichen Seitenabschnitt zu befestigen.

2. Fußbekleidungsartikel nach Anspruch 1, wobei die mehreren Abschnitte ferner einen oder mehrere Ansätze in der einheitlichen Strickkonstruktion umfassen, die durch das Strickverfahren in Formen gestrickt werden und mit dem oberen Hauptkörper über das Stricken von Nähten, die im Strickverfahren erzeugt werden, oder über das Verbinden von Strängen, die im Strickverfahren erzeugt werden, nahtlos verbunden werden.

3. Fußbekleidungsartikel nach Anspruch 2, wobei der eine oder die mehreren Ansätze in der einheitlichen Strickkonstruktion eines oder mehrere der folgenden Elemente umfassen: eine Sohle; eine Einlegesohle; eine Lasche; eine Fersenstütze; eine seitliche Stütze; eine weitere obere Lage; eine Innenlage; eine Frotteekissen-Anordnungsstruktur; ein Futter; und eine Gitterstruktur, und wobei der Fußbekleidungsartikel ferner einen oder mehrere Stricklücken enthält, wodurch eine Struktur für das nahtlose Obermaterial erzeugt wird.

4. Fußbekleidungsartikel nach Anspruch 1, wobei das eine oder die mehreren Verstärkungsstrickgarne eines oder mehrere der folgenden Garne umfassen: ein thermoplastisches Klebemischgarn; ein Meta-Aramid; ein Para-Aramid, ein nichtthermisches Klebemischgarn; ein Aramidgarn.

5. Fußbekleidungsartikel nach Anspruch 2, wobei jedes des einen oder der mehreren Verstärkungsstrickgarne Polymer-Verstärkungsfasern umfasst, die verarbeitet werden, um den wenigstens einen Abschnitt der mehreren Abschnitte in der einheitlichen Strickkonstruktion zu stützen, wobei die Polymer-Verstärkungsfasern eine oder mehrere der folgenden Fasern umfassen: Kohlenstofffasern; oxidierte Fasern; Glas; Quarzglas, Aramid; und Para-Aramid; auxetische Fasern; ein thermisch abgeschirmtes elektrisches Kabel; Keramik mit hohem Wärmewiderstand, Thermoelementleiter; Litze; Aramide; Glas (S-Glas, r-Glas) Hanf, Jute, Flachs, Bor, Metalle, Basalt, Metalle (Aluminiumlegierungen, Magnesiumlegierungen, Titanium etc.), Formgedächtnislegierungen und Keramik (SiC, Glaskeramik etc.) und Para-Aramide.

6. Fußbekleidungsartikel nach Anspruch 5, wobei eines oder mehrere gestrickte Kettgarne mit Verstärkungsschussfaden während des Strickverfahrens in einer oder mehreren Richtungen gestrickt, verschlungen, geflochten, gefaltet und/oder über ausgewählte Abschnitte der mehreren Abschnitte geführt werden.

7. Fußbekleidungsartikel nach Anspruch 1, wobei das eine oder die mehreren Verstärkungsstrickgarne während des Strickverfahrens gestrickt, verschlungen, geflochten, gefaltet und/oder über beide Seiten des faserverstärkten Polymer-Komposit-Textilteilstücks geführt werden.

8. Fußbekleidungsartikel nach Anspruch 2, wobei das eine oder die mehreren Verstärkungsstrickgarne mit Harz imprägnierte Stränge umfassen.

9. Fußbekleidungsartikel nach Anspruch 1, wobei der Winkel zwischen dem Fersenabschnitt und dem mittleren und dem seitlichen Abschnitt ausschließlich durch das Strickverfahren gebildet wird, und wobei der Winkel größer als 70° ist.

10. Fußbekleidungsartikel nach Anspruch 2, wobei die einheitliche Strickkonstruktion durch das Strickverfahren ausschließlich unter Verwendung der Strickmaschine in drei Dimensionen vollständig ausgebildet wird, und wobei ferner die mehreren Abschnitte unterschiedliche Konfigurationen haben, die durch das Strickverfahren definiert werden, wobei wenigstens eine der unterschiedlichen Konfigurationen eine Faserdichte umfasst, die in verschiedenen Zonen unterschiedlich ist.

11. Verfahren zum Herstellen eines nahtlosen Fußbekleidungsartikels, wobei das Verfahren die folgenden Schritte umfasst:
Ausführen eines Strickverfahrens durch eine Strickmaschine, um eine erste einheitliche textilen Konstruktion (33, 55, 59) mit drei Dimensionen zu erzeugen, die ein erstes Obermaterial (17) definiert, wobei die erste einheitliche textile Konstruktion mehrere Abschnitte umfasst, die Folgendes definieren:
einen oberen Hauptkörper, der erste mehrere Abschnitte umfasst, wobei jeder der ersten mehreren Abschnitte durch das Strickverfahren in Form gestrickt wird und mit einem weiteren Abschnitt durch Stricken von Nähten, die im Strickverfahren erzeugt werden, nahtlos verbunden wird, und wobei die ersten mehreren Abschnitte folgende Abschnitte umfassen: einen seitlichen Seitenabschnitt; einen Zehenabschnitt; einen mittleren Seitenabschnitt; einen Knöchelabschnitt, einen Einstiegsabschnitt; und einen Fersenabschnitt; und
einen oder mehrere Ansätze, die durch das Strickverfahren in Formen gestrickt werden und mit dem oberen Hauptkörper durch Stricken von Nähten, die im Strickverfahren erzeugt werden, nahtlos verbunden werden;
wobei das Ausführen des Strickverfahrens das Verstricken eines oder mehrerer Verstärkungsstrickgarne (31, 34) umfasst, um einen gestrickten Verstärkungsabschnitt zu bilden, der einem Abschnitt der mehreren Abschnitte entspricht, und wobei jedes des einen oder der mehreren Verstärkungsstrickgarne Polymerverstärkungsfasern (31, 34) umfasst;
wobei der Fersenabschnitt durch Stricken eines Einsatzes im Strickverfahren gebildet wird, wobei der Einsatz Schlaufen hat;
Verarbeiten des Einsatzes im Strickverfahren;
Bewegen von Nähten für den Fersenabschnitt zu einem alternativen Nadelbett der Strickmaschine und daraufhin Befestigen der Schlaufen des Einsatzes am mittleren Seitenabschnitt und am seitlichen Seitenabschnitt, um den Einsatz am mittleren Seitenabschnitt und am seitlichen Seitenabschnitt zu befestigen; und
Befestigen wenigstens einer oberen Struktur, die das erste Obermaterial umfasst, an einer Außensohle.

12. Verfahren nach Anspruch 11, das ferner nach dem Strickverfahren das Durchführen eines Polymer-Komposit-Verfahrens umfasst, um den gestrickten Verstärkungsabschnitt in ein faserverstärktes textiles Polymer-Komposit-Teilstück umzuwandeln, das im ersten Obermaterial enthalten ist.

13. Verfahren nach Anspruch 11, wobei das Verstricken des einen oder der mehreren Verstärkungsstrickgarne die folgenden Schritte umfasst:
Verwenden eines Garn-Zufuhrelements an der Strickmaschine, um das eine oder mehrere Verstärkungsstrickgarne in einer vertikalen Richtung und einer Richtung von Seite zu Seite zu bewegen; und
Stricken, Falten, Flechten und/oder Einlegen des einen oder der mehreren Verstärkungsstrickgarne in ein vertikales textiles Kettenelement.

14. Verfahren nach Anspruch 11, wobei der eine oder die mehreren Ansätze eines oder mehrere der folgenden Elemente umfasst: eine Sohle; eine Einlegesohle; eine Lasche; eine Fersenstütze; eine seitliche Stütze; eine weitere obere Lage; eine Innenlage; eine Frotteekissen-Anordnungsstruktur; ein Futter; und/oder eine Gitterstruktur, und wobei das erste Obermaterial ferner eine oder mehrere Stricklücken enthält, wodurch eine Struktur für das nahtlose Obermaterial erzeugt wird.

15. Verfahren nach Anspruch 12, wobei das eine oder die mehreren Verstärkungsstrickfasern eine oder mehrere der folgenden Fasern umfassen: ein thermoplastisches Klebemischgarn; ein Meta-Aramid; ein Para-Aramid, ein nichtthermisches Klebemischgarn; Glas (S-Glas, r-Glas) Hanf, Jute, Flachs, Bor, Metall, Basalt, Metalllegierung, Formgedächtnislegierung; und Keramik; ein thermisch abgeschirmtes elektrisches Kabel; Thermoelementleiter; Litze; auxetisches Material; und/oder Aaramidgarn.

16. Verfahren nach Anspruch 12, wobei jedes des einen oder der mehrere Verstärkungsstrickgarne Polymer-Verstärkungsfasern umfasst, die verarbeitet werden können, um das faserverstärkte textile Polymer-Komposit-Teilstück zu stützen, wobei das eine oder die mehren Verstärkungsstrickgarne eine oder mehrere der folgenden Fasern umfassen: Kohlenstofffasern; oxidierte Fasern; Glas; Quarzglas, Aramid; und Para-Aramid; Keramik mit hohem Wärmeleitungswiderstand; Draht; Drahtlitze; Aramide; Para-Aramide und mit Harz imprägnierte Stränge.

17. Verfahren nach Anspruch 12, wobei das Strickverfahren das Erzeugen einer durchgehenden Kette aus einheitlichen textilen Konstruktionen umfasst, wobei jede einheitliche textile Konstruktion einem Obermaterial entspricht und mit einer weiteren durch Opfer- oder Entkopplungsstränge verbunden ist, die im Strickverfahren erzeugt werden, wobei die durchgehende Kette aus einheitlichen textilen Konstruktionen eine erste einheitliche textile Konstruktion umfasst, und wobei ferner jede einheitliche textile Konstruktion in der durchgehenden Kette einen gestrickten Verstärkungsabschnitt umfasst; und
Trennen der durchgehenden Kette aus einheitlichen textilen Konstruktionen voneinander durch Abtrennen jedes der Opfer- oder Entkopplungsstränge.

18. Verfahren nach Anspruch 17, wobei die durchgehende Kette aus einheitlichen textilen Konstruktionen mehreren Obermaterialien einer gleichen Konfiguration entspricht oder Obermaterialien mit unterschiedlichen Konfigurationen entspricht, wobei die mehren Obermaterialien der gleichen Konfiguration oder die Obermaterialien mit unterschiedlicher Konfiguration unter Verwendung einer Steuerung hergestellt werden, um eine aufeinanderfolgende Verkettung von oberen Strukturen zu erzeugen.

19. Verfahren nach Anspruch 11, wobei die mehreren Abschnitte unterschiedliche Konfigurationen haben, die durch das Strickverfahren definiert werden.

20. Verfahren nach Anspruch 12, wobei die erste einheitliche textile Konstruktion Folgendes umfasst: einen ersten Ansatz; und eine bewegliche Verbindung, die den ersten Ansatz mit dem oberen Hauptkörper verbindet, und wobei es ferner nach dem Strickverfahren das Umklappen des ersten Ansatzes in eine vorgegebene Position im ersten Obermaterial entlang der beweglichen Verbindung umfasst.

21. Verfahren nach Anspruch 16, wobei das Ausführen des Polymer-Komposit-Verfahrens das Erhitzen des gestrickten Verstärkungsabschnitts umfasst, um das eine oder die mehreren Verstärkungsstrickgarne zu karbonisieren.

22. Verfahren nach Anspruch 11, wobei die Strickmaschine das Verwenden einer Abspulvorrichtung umfasst, die betrieben werden kann, um wenigstens drei oder mehr Garnspulen im Strickverfahren abzuspulen.

23. Verfahren nach Anspruch 11, wobei das Ausführen des Strickverfahrens das Stricken der mehreren Abschnitte unter Verwendung unterschiedlicher Nahtmuster umfasst.

## Revendications

1. Article chaussant avec un ou plusieurs éléments de renfort en polymère comprenant : une tige sans couture (17) composée d'une pluralité de matériaux qui comprend une fibre de renfort (31, 34) la tige sans couture étant formée dans une structure tricotée unitaire (33, 55, 59) par un processus de tricotage effectué par une machine à tricoter,
dans lequel la structure tricotée unitaire comprend un corps principal supérieur comprenant une pluralité de parties, au moins une partie de la pluralité de parties dans la structure tricotée unitaire comprend la fibre de renfort polymère qui est formée par tricotage d'un ou plusieurs fils à tricoter de renforcement pendant le processus de tricotage ;
dans lequel chacune de la pluralité de parties est tricotée en forme par le processus de tricotage et est reliée à une autre partie de la structure tricotée unitaire sans couture en tricotant des mailles qui sont générées dans le processus de tricotage ;
dans lequel la pluralité de parties de la structure tricotée unitaire comprend : une partie de cotée latérale ; une partie orteil; une partie latérale médiane ; une partie cheville; une partie cou-de-pied; et une partie de talon, dans lequel en outre un angle entre la partie de talon et la partie de cou-de-pied est formé par le processus de tricotage, dans lequel :
la partie talon est formée par une pièce rapportée généré lors du processus de tricotage ;
la pièce rapportée étant manipulé dans le processus de tricotage ; et
la pièce rapportée ayant des boucles, dans lequel la pièce rapportée a été produit par la machine à tricoter en déplaçant les mailles de la partie talon vers fonture alternative et en fixant ensuite les boucles de la pièce rapportée à la partie latérale médiane et à la latérale située sur le côté pour fixer la pièce rapportée à la partie latérale médiane et la partie latérale située sur le côté.

2. Article chaussant selon la revendication 1, dans lequel la pluralité de parties comprend en outre un ou plusieurs appendices dans la structure tricotée unitaire qui sont tricotés en formes par le processus de tricotage et reliés au corps principal supérieur sans couture via des points de tricotage qui sont générés dans le processus de tricotage, ou via des brins de connexion qui sont générés dans le processus de tricotage.

3. Article chaussant selon la revendication 2, dans lequel le ou les appendices dans la structure tricotée unitaire comprennent un ou plusieurs éléments parmi : une semelle ; une semelle intérieure; une langue; un support de talon ; un support latéral; une autre couche supérieure; une couche interne ; une structure d'assemblage de coussin en bouclette éponge; une doublure; et une structure en treillis, et l'article chaussant comprend en outre un ou plusieurs espaces vides tricotés créant ainsi une cage pour la tige sans couture.

4. Article chaussant selon la revendication 1, dans lequel le ou les fils de renfort à tricoter comprennent un ou plusieurs parmi : un fil adhésif thermoplastique mélangé ; un métaaramide; un para-aramide; un fil adhésif non thermique mélangé; fil d'aramide.

5. Article chaussant selon la revendication 2, dans lequel chacun des un ou plusieurs fils à tricoter de renforcement comprend des fibres de renforcement polymères utilisables pour supporter au moins une partie de la pluralité de parties dans la structure tricotée unitaire, dans lequel les fibres de renforcement polymères comprennent une ou plus de : fibres de carbone ; fibres oxydées; verre; silice vitreuse; aramide; et para-aramide; fibres auxétiques; câble électronique thermoblindé; céramiques à haute résistance à la chaleur, fils de couplage thermique, tresses; aramides, verre (S-glass, r-glass), chanvre, jute, lin, bore, métaux, basalte, métaux (alliages d'aluminium, alliages de magnésium, titane, etc.), alliages à mémoire de forme et céramiques (SiC, vitrocéramique, etc) et para-aramides.

6. Article chaussant selon la revendication 5, dans lequel un ou plusieurs fils de chaîne tricotés en trame de renforcement sont tricotés entrelacés, tressés, rentrés et/ou passés sur des parties sélectionnées de la pluralité de parties pendant le processus de tricotage dans une ou plusieurs directions.

7. Article chaussant selon la revendication 1, dans lequel le ou les fils de renfort à tricoter sont tricotés, bouclés entre eux, tressés, rentrés et/ou passés sur les deux faces de la section de tissu composite polymère renforcé de fibres pendant le processus de tricotage.

8. Article chaussant selon la revendication 2, dans lequel le ou les fils de renfort à tricoter comprennent des brins imprégnés de résine.

9. Article chaussant selon la revendication 1, dans lequel l'angle entre la partie de talon et les parties médiane et latérale est formé exclusivement par le processus de tricotage, et dans lequel l'angle est supérieur à 70°.

10. Article chaussant selon la revendication 2, dans lequel la structure tricotée unitaire est entièrement façonnée en trois dimensions à travers le processus de tricotage en utilisant exclusivement la machine à tricoter, et dans lequel en outre la pluralité de parties ont des configurations différentes définies par le processus de tricotage, au moins une des différentes configurations comprend une densité de fibres qui varie dans différentes zones.

11. Procédé de fabrication d'articles chaussants sans couture, le procédé comprenant les étapes consistant à :
effectuer un processus de tricotage par une machine à tricoter pour générer une première structure textile unitaire (33, 55, 59) de trois dimensions qui définit une première tige (17), dans lequel la première structure textile unitaire comprend une pluralité de parties qui définissent un corps principal supérieur comprenant une première pluralité de parties, dans lequel chacune de la première pluralité de parties est tricotée en forme par le processus de tricotage et est reliée à une autre partie sans couture par des points de tricot qui sont générés dans le processus de tricotage, et
dans lequel la première pluralité des parties comprennent : une partie latérale située sur le côté ; une partie orteil; une partie latérale médiane ; une partie cheville; une partie cou-de-pied; et une partie talon; et
un ou plusieurs appendices qui sont tricotés en formes par le processus de tricotage et reliés au corps principal supérieur sans couture en tricotant des mailles qui sont générées au cours du processus de tricotage ;
dans lequel la réalisation du processus de tricotage comprend le tricotage d'un ou plusieurs fils à tricoter de renforcement (31, 34) pour former une partie de renforcement tricotée qui correspond à une partie de la pluralité de parties, et dans lequel chacun des un ou plusieurs fils à tricoter de renforcement comprend du fibre de renforcement polymère (31, 34);
la partie de talon est formée en tricotant une pièce rapportée dans le processus de tricotage, la pièce rapportée ayant des boucles ;
manipuler la pièce rapportée dans le processus de tricotage ;
déplacer les mailles de la partie talon vers une fonture alternative de la machine à tricoter et ensuite fixer les boucles de la pièce rapportée à la partie médiane et à la partie latérale pour fixer la pièce rapportée à la partie médiane et à la partie latérale ; et
attacher au moins une structure supérieure comprenant la première tige avec une semelle extérieure.

12. Procédé selon la revendication 11, comprenant en outre, après le processus de tricotage, la réalisation d'un processus de composite polymère pour transformer la partie de renforcement tricotée en une section de tissu composite polymère renforcé de fibres comprise dans la première tige.

13. Procédé selon la revendication 11, dans lequel le tricotage du ou des fils de renfort à tricoter comprend les étapes consistant à :
utiliser un distributeur de fil sur la machine à tricoter pour déplacer le ou les fils de renfort à tricoter dans une direction verticale et côte à côte ; et
tricoter, border, tresser et/ou incruster le ou les fils de renfort à tricoter dans un élément textile à chaîne verticale.

14. Procédé selon la revendication 11, dans lequel le ou les appendices comprennent un ou plusieurs parmi : une semelle ; une semelle intérieure ; une langue; un support de talon ; un support latéral; une autre couche supérieure; une couche interne ; une structure d'assemblage de coussin en bouclette éponge; une doublure; et/ou une structure en treillis, et la première tige comprenant en outre un ou plusieurs espaces vides tricotés créant ainsi une cage pour la tige sans couture.

15. Procédé selon la revendication 12, dans lequel le ou les fils de renfort à tricoter comprennent l'utilisation d'un ou plusieurs parmi : un fil adhésif thermoplastique mélangé ; un métaaramide; un para-aramide; un fil adhésif non thermique mélangé; verre (S-glass, r-glass), chanvre; jute; lin; bore; métal; basalte; alliage métallique; alliage à mémoire de forme; et céramique; câble électronique thermoblindé; fil de couplage thermique; tresse; matériel auxétique; et/ou un fil aramide.

16. Procédé selon la revendication 12, dans lequel chacun des un ou plusieurs fils à tricoter de renforcement comprend des fibres de renforcement polymères utilisables pour supporter la section de tissu composite polymère renforcé de fibres, dans lequel le ou les fils à tricoter de renforcement comprennent un ou plusieurs parmi : des fibres de carbone ; fibres oxydées; verre; silice vitreuse; aramide; et para-aramide; céramique à haute résistance à la chaleur; fil; tresses métalliques; aramides; para-aramides; et brins imprégnés de résine.

17. Procédé selon la revendication 12, dans lequel le processus de tricotage comprend la génération d'une chaîne continue de structures textiles unitaires, dans lequel chaque structure textile unitaire correspond à une tige et s'interconnecte avec une autre par des brins sacrificiels ou de découplage qui sont générés dans le processus de tricotage, dans lequel le chaîne continue de structures textiles unitaires comprend une première structure textile unitaire, et dans lequel en outre chaque structure textile unitaire dans la chaîne continue comprend une partie de renfort tricotée, et
la séparation de la chaîne continue de structures textiles unitaires les unes des autres en séparant chacune des brins sacrificiels ou de découplage.

18. Procédé selon la revendication 17, dans lequel la chaîne continue de structures textiles unitaires correspond à une pluralité de tiges d'une même configuration ou correspond à des tiges de configurations différentes, la pluralité de tiges de même configuration ou les tiges de configuration différente étant fabriqué à l'aide d'un contrôleur pour créer une guirlande séquentielle de structures supérieures.

19. Procédé selon la revendication 11, dans lequel la pluralité de parties ont des configurations différentes définies par le processus de tricotage.

20. Procédé selon la revendication 12, dans lequel la première structure textile unitaire comprend : un premier appendice ; et une charnière active reliant le premier appendice au corps principal supérieur, et comprenant en outre, après le processus de tricotage, le pliage du premier appendice dans une position prédéfinie dans la première tige le long de la charnière active.

21. Procédé selon la revendication 16, dans lequel la réalisation du procédé de composite polymère comprend le chauffage de la partie de renfort tricotée pour carboniser le ou les fils de renfort à tricoter.

22. Procédé selon la revendication 11, dans lequel la machine à tricoter comprend l'utilisation d'un dispositif de débobinage utilisable pour débobiner au moins trois bobines ou plus de fils dans le processus de tricotage.

23. Procédé selon la revendication 11, dans lequel la réalisation du processus de tricotage comprend le tricotage de la pluralité de parties en utilisant différents motifs de points.
